# EUROPEAN PATENT APPLICATION

(11) **EP 4 429 193 A1**
(43) Date of publication of application: **11.09.2024**
(21) Application number: 23189917.0
(22) Date of filing: 07.08.2023
(51) Int. Cl.: H04L 51/02

(54) **PROGRAM AND INFORMATION PROCESSING SYSTEM**

(30) Priority: 08.03.2023 JP 2023035471
(71) Applicant: FUJIFILM Business Innovation Corp., Minato-ku Tokyo (JP)
(72) Inventor: SUEZAWA, Yoshihito, Yokohama-shi, Kanagawa (JP)
(74) Representative: Kurig, Thomas

(57) **Abstract**

A program causes a computer to implement a function of acquiring a received message that is a message received, a function of controlling to display a candidate message that is a candidate of a message to be replied in response to the received message, and a function of controlling to display task information related to a task to be executed in relation to replying the candidate message in association with the candidate message.

## Description

### BACKGROUND OF THE INVENTION

### (i) Field of the Invention

The present invention relates to a program and an information processing system.

### (ii) Description of Related Art

JP2019-518279A, a method and an apparatus for determining a particular service entity for action by using an automated messaging system to participate in a dialog with at least one user through a user's computing device are described.

JP2007-521562A, actionable message communication is described in which a message outlining possible actions is transmitted to an apparatus, this message and information related to the actions are stored, and are used when receiving a response message, the user is able to respond with a message specifying a desired action, an action to be executed is determined by using the stored information, and the action is executed.

JP2017-41239A, a message reception notification method is described which includes: parsing a message received by a user terminal to determine which of a plurality of message types corresponds to the received message, by predefining a plurality of message types and frames of type-specific notification windows for classifying messages; determining a frame corresponding to the type of the received message, among the frames of the type-specific notification windows; and processing the received message according to the frame corresponding to the type of the received message to generate and provide a notification window for the received message.

### SUMMARY OF THE INVENTION

In a case where a configuration is adopted in which only candidate messages, which are candidates of a message to be replied in response to a received message, are displayed, the user cannot recognize tasks to be executed in relation to replying the candidate messages.

An object of the present invention is to enable a user to recognize a task to be executed in relation to replying a candidate message.

According to a first aspect of the present disclosure, there is provided a program causing a computer to implement: a function of acquiring a received message that is a message received; a function of controlling to display a candidate message that is a candidate of a message to be replied in response to the received message; and a function of controlling to display task information related to a task to be executed in relation to replying the candidate message in association with the candidate message.

A second aspect of the present disclosure, there is provided the program according to the first aspect, in which the function of controlling to display the candidate message performs control to display a plurality of candidate messages, and the function of controlling to display the task information performs control to display the task information related to a plurality of tasks including the task to be executed in relation to replying any one of the plurality of candidate messages.

A third aspect of the present disclosure, there is provided the program according to the second aspect, in which the function of controlling to display the task information performs control to display the task information, in response to an operation on a display element other than the plurality of candidate messages.

A fourth aspect of the present disclosure, there is provided the program according to the second aspect, in which the function of controlling to display the task information performs control such that first task information related to a task to be executed in relation to replying a first candidate message among the plurality of candidate messages, and second task information related to a task to be executed in relation to replying a second candidate message among the plurality of candidate messages are displayed to be distinguished.

A fifth aspect of the present disclosure, there is provided the program according to the fourth aspect, in which the function of controlling to display the task information performs control such that the first task information and the second task information are displayed to be distinguished according to a display mode in a case where the first task information and the second task information are displayed.

A sixth aspect of the present disclosure, there is provided the program according to the fourth aspect, in which the function of controlling to display the task information performs control such that the first task information and the second task information are displayed to be distinguished according to a display mode in a case where an operation on the first candidate message is performed.

A seventh aspect of the present disclosure, there is provided the program according to the first aspect, in which the function of controlling to display the candidate message performs control to display a plurality of candidate messages, and the function of controlling to display the task information performs control to display task information related to a task to be executed in relation to replying one candidate message among the plurality of candidate messages, in response to an operation on the one candidate message.

An eighth aspect of the present disclosure, there is provided the program according to the seventh aspect, in which the function of controlling to display the task information performs control to display task information related to a task different from a task to be executed in relation to replying another candidate message among the plurality of candidate messages, as the task information related to the task to be executed in relation to replying the one candidate message.

A ninth aspect of the present disclosure, there is provided the program according to any one of the first to eighth aspects, in which the function of controlling to display the task information performs control to display task information related to unexecuted tasks, and not to display task information related to executed tasks, among the tasks to be executed in relation to replying the candidate messages.

A tenth aspect of the present disclosure, there is provided the program according to any one of the first to eighth aspects, in which the function of controlling to display the task information performs control such that the task information related to the unexecuted tasks and the task information related to the executed tasks are displayed to be distinguished, among the tasks to be executed in relation to replying the candidate messages.

An eleventh aspect of the present disclosure, there is provided the program according to the tenth aspect, in which the function of controlling to display the task information performs control to further display a ratio of the unexecuted tasks or the executed tasks to the tasks to be executed in relation to replying the candidate messages.

A twelfth aspect of the present disclosure, there is provided the program according to any one of the first to eleventh aspects, in which the candidate messages are associated with a document, and the tasks include an operation on the document.

A thirteenth aspect of the present disclosure, there is provided the program according to the twelfth aspect, in which the function of controlling to display the task information controls to display information indicating a part to be edited of the document, as the task information.

A fourteenth aspect of the present disclosure, there is provided the program according to any one of the first to thirteenth aspects in which the program causes the computer to further implement a function of executing a task corresponding to the task information displayed in association with the candidate message, in response to an operation on the candidate message.

According to a fifteenth aspect of the present disclosure, there is provided an information processing system including: one or a plurality of processors configured to acquire a received message that is a message received; control to display a candidate message that is a candidate of a message to be replied in response to the received message; and control to display task information related to a task to be executed in relation to replying the candidate message in association with the candidate message.

According to the first aspect of the present disclosure, the user is able to recognize the task to be executed in relation to replying the candidate message.

According to a second aspect of the present invention, the user is able to recognize a plurality of tasks including a task to be executed in relation to replying any of the plurality of candidate messages.

According to a third aspect of the present disclosure, a user is able to recognize a plurality of tasks without operating any of the plurality of candidate messages.

According to a fourth aspect of the present disclosure, the user is able to distinguish and recognize a task to be executed in relation to replying a certain candidate message and a task to be executed in relation to replying another candidate message.

According to a fifth aspect of the present disclosure, the user is able to quickly distinguish and recognize a task to be executed in relation to replying a certain candidate message and a task to be executed in relation to replying another candidate message.

According to a sixth aspect of the present disclosure, the user is able to distinguish and recognize a task to be executed in relation to replying a certain candidate message and a task to be executed in relation to replying another candidate message, when necessary.

According to a seventh aspect of the present disclosure, the user is able to recognize the task to be executed in relation to replying a certain candidate message, when necessary.

According to an eighth aspect of the present disclosure, the user is able to recognize that the task to be executed in relation to replying a certain candidate message is different from the task to be executed in relation to replying another candidate message.

According to the ninth aspect of the present disclosure, the user is able to recognize only an unexecuted tasks among the tasks to be executed in relation to replying the candidate message.

According to a tenth aspect of the present disclosure, the user is able to distinguish and recognize unexecuted tasks and executed tasks among the tasks to be executed in relation to replying the candidate message.

According to the eleventh aspect of the present disclosure, the user is able to recognize the ratio of the unexecuted tasks or the executed tasks to the tasks to be executed in relation to replying the candidate message.

According to a twelfth aspect of the present disclosure, the user is able to recognize the task to be executed on the document in relation to replying the candidate message associated with the document.

According to the thirteenth aspect of the present disclosure, the user is able to recognize the part to be edited in the document.

According to the fourteenth aspect of the present disclosure, the task recognized by the user as the task to be executed in relation to replying the candidate message is automatically executed.

According to the fifteenth aspect of the present disclosure, the user is able to recognize the task to be executed in relation to replying the candidate message.

### BRIEF DESCRIPTION OF THE DRAWINGS

Exemplary embodiment(s) of the present invention will be described in detail based on the following figures, wherein:
Fig. 1 is a diagram illustrating an overall configuration example of a task information proposal system according to the present exemplary embodiment;
Fig. 2 is a diagram illustrating a hardware configuration example of a mobile terminal according to the present exemplary embodiment;
Fig. 3 is a diagram illustrating a hardware configuration example of an inference server according to the present exemplary embodiment;
Fig. 4 is a diagram showing an example of a first screen in which candidates of a reply message are displayed by inference of an inference server;
Fig. 5 is a diagram showing an example of a screen displayed in a case where a leftmost reply candidate button is pressed on a screen of Fig. 4;
Fig. 6 is a diagram showing an example of a screen displayed in a case where a right automatic input check button is pressed on the screen of Fig. 5;
Fig. 7 is a diagram showing an example of a screen displayed in a case where a rightmost reply candidate button is pressed on a screen of Fig. 4;
Fig. 8 is a diagram showing an example of a screen displayed in a case where a right automatic input check button is pressed on the screen of Fig. 7;
Fig. 9 is a diagram showing an example of a screen in a case where the user explicitly selects a transmission destination name on the screen of Fig. 4;
Fig. 10 is a diagram showing an example of a screen in a case where the user explicitly assigns an approval mark to the document image on the screen of Fig. 4;
Fig. 11 is a diagram showing an example of a second screen in which candidates of a reply message are displayed by inference of an inference server;
Fig. 12 is a diagram showing an example of a screen displayed in a case where a task check button is pressed on the screen of Fig. 11;
Fig. 13 is a diagram showing an example of a third screen in which candidates of a reply message are displayed by inference of an inference server;
Fig. 14 is a diagram showing an example of a screen displayed in a case where a left reply candidate button is pressed on a screen of Fig. 13;
Fig. 15 is a block diagram showing a functional configuration example of a mobile terminal according to the present exemplary embodiment;
Fig. 16 is a sequence diagram showing a first operation example of the task information proposal system according to the present exemplary embodiment;
Fig. 17 is a sequence diagram showing a second operation example of the task information proposal system according to the present exemplary embodiment; and
Fig. 18 is a sequence diagram showing a third operation example of the task information proposal system according to the present exemplary embodiment.

### DETAILED DESCRIPTION OF THE INVENTION

Hereinafter, an exemplary embodiment of the present invention will be described in detail with reference to the accompanying drawings.

### [Outline of Present Exemplary Embodiment]

According to the present exemplary embodiment, provided is a program controlling a computer to acquire a received message that is a message received; control to display a candidate message that is a candidate of a message to be replied in response to the received message; and control to display task information related to a task to be executed in relation to replying the candidate message in association with the candidate message.

In the following, a mobile terminal as a computer is used as an example, and a case where the inference server infers a candidate message in response to a request from the mobile terminal and displays the task information in association with the candidate message will be described as an example.

### [Overall Configuration of Task Information Proposal System]

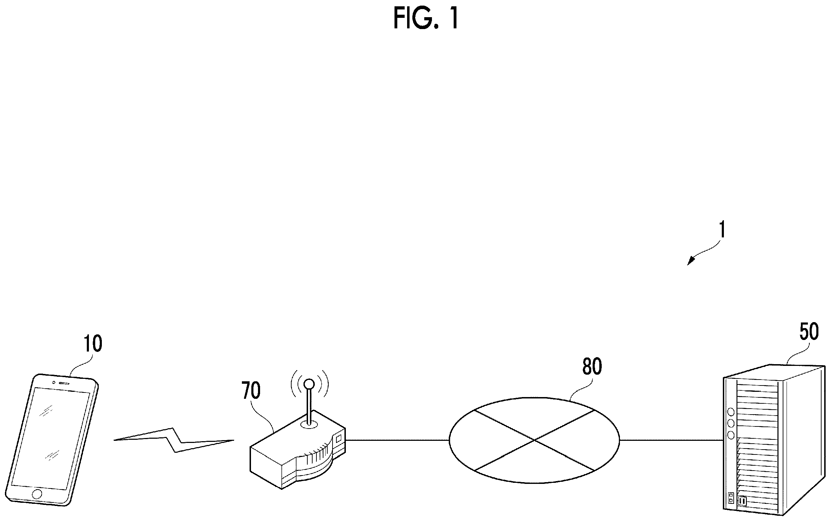

Fig. 1 is a diagram illustrating an overall configuration example of a task information proposal system 1 according to the present exemplary embodiment. As shown in Fig. 1, the task information proposal system 1 includes a mobile terminal 10 and an inference server 50. The mobile terminal 10 can be wirelessly connected to a communication line 80 via an access point 70 by wireless communication such as Wi-Fi (registered trademark). Further, the inference server 50 is connected to the communication line 80. In Fig. 1, only one mobile terminal 10 and one inference server 50 are shown, but a plurality of the mobile terminals 10 and a plurality of the inference servers 50 may exist. Further, the communication line 80 may be, for example, the Internet.

The mobile terminal 10 is a terminal device used when a user transmits and receives a message. A messaging application for transmitting and receiving a message is installed in the mobile terminal 10. Then, the mobile terminal 10 receives a message from another user or transmits a message to another user by wireless communication such as Wi-Fi (registered trademark). The mobile terminal 10 may be implemented by, for example, a smartphone. In the present exemplary embodiment, the mobile terminal 10 is provided as an example of a computer.

The inference server 50 is a server computer that returns information as an objective variable, based on information as an explanatory variable transmitted from the mobile terminal 10. The inference server 50 may be implemented by, for example, a personal computer.

Here, the inference server 50 is trained by learning the contents of the reply message that is input in response to the message received in the past and the past task content performed after the input of the reply message through machine learning, and has a function of inferring reply candidates which are candidates of reply message based on the contents of the received message and inferring a task to be executed in relation to the reply candidates. Hereinafter, a method of machine learning for enabling the inference server 50 to infer reply candidates and tasks to be executed in relation to the reply candidates will be described.

First, inference of reply candidates will be described. The inference of reply candidates is implemented by learning the exchange of messages performed between a plurality of users through machine learning. Through this learning, by learning a certain transmitted message as an input value and a message replied to the certain message as an output value, a model for inferring candidates of the reply message can be created when the transmitted message is uniquely determined.

Next, inference of the task to be executed in relation to the reply candidate will be described. The task to be executed is implemented by learning the task history such as what types of a task are executed through machine learning, after the user input a reply message that is a reply candidate in the past. For example, after inputting the reply message, the task content performed within a predetermined period (for example, one minute) may be learned as the task related to the content of the input message. In addition to the content of the message, the sender of the message, a storage location (tray) in which the document transmitted with the attached message was stored, or which storage location (tray) in which the document was stored in a case where the document was received, or a time when the message was received may be included in the task history and used for the learning data.

As a result of performing machine learning in this manner, in a case where any value as an explanatory variable, for example, information related to the sender of a message, the content of the message, a storage location (tray) in which the document transmitted with the attached message was originally stored, or which storage location (tray) in which the document was stored in a case where the document was received is input to the inference server 50, a model is created in which reply candidates and tasks to be executed in relation to the reply candidates are output as the objective variables for the values.

Although the inference server 50 infers the task to be executed in relation to the reply candidate, the inference server 50 may infer task items (task information) to be executed in relation to the reply candidates and task contents to be executed for the task items separately. Further, the task items to be executed in relation to the reply candidates may not be inferred by the inference server 50, but may be associated with the reply candidates in advance by a table or the like, and the inference server 50 may infer the task contents to be executed for the task items.

### [Hardware Configuration of Mobile Terminal]

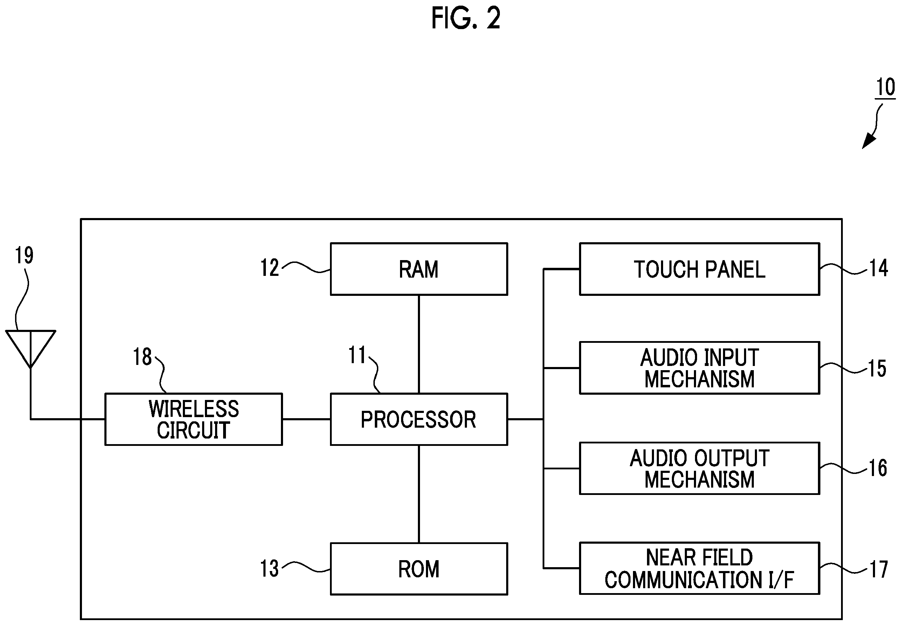

Fig. 2 is a diagram illustrating a hardware configuration example of the mobile terminal 10 according to the present exemplary embodiment. As shown in Fig. 2, the mobile terminal 10 includes a processor 11 that is a calculation unit, a RAM 12 and a ROM 13 that are storage units, a touch panel 14 that displays various types of information and receives an operation input from a user, an audio input mechanism 15 such as a microphone, an audio output mechanism 16 such as a speaker, and a short-range wireless communication interface (I/F) 17 that transmits and receives various types of information to and from other apparatuses by short-range wireless communication such as Near Field Communication (NFC). Further, the wireless circuit 18 and the antenna 19 for performing wireless communication via the base station are provided. Here, although not shown, the wireless circuit 18 includes a baseband LSI that performs signal processing of digital data transmitted and received wirelessly.

### [Hardware Configuration of Inference Server]

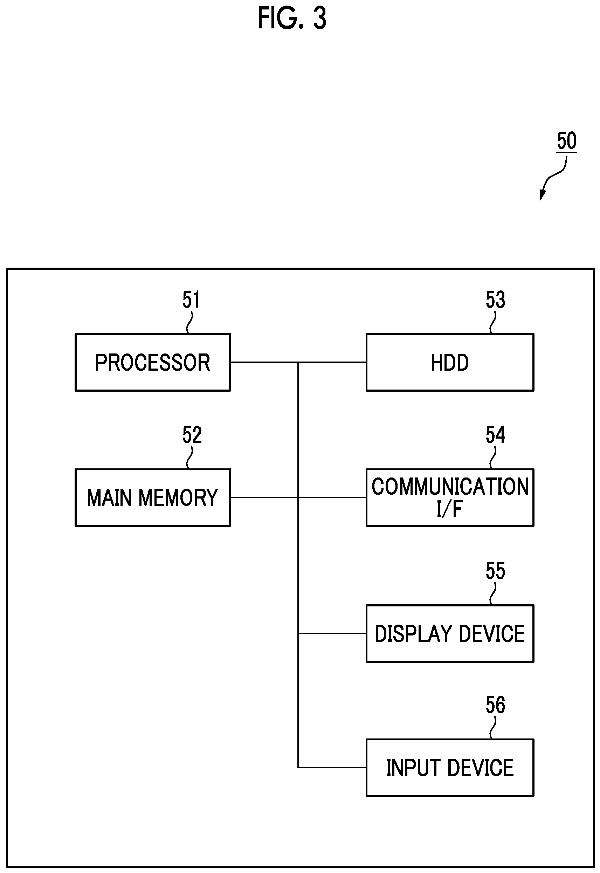

Fig. 3 is a diagram illustrating a hardware configuration example of the inference server 50 according to the present exemplary embodiment. As illustrated in Fig. 3, the inference server 50 includes a processor 51, a main memory 52, and a Hard Disk Drive (HDD) 53. Here, the processor 51 executes various software such as an Operating System (OS) and an application, and achieves each function described later. The main memory 52 is a storage area for storing various software and data used for executing the software, and the HDD 53 is a storage area for storing input data to various software and output data from various software. Further, the inference server 50 includes a communication interface (I/F) 54 for communicating with the outside, a display device 55 such as a display, and an input device 56 such as a keyboard and a mouse.

### [Display Example on Mobile Terminal]

In the following, a scene in which a certain document is transmitted together with a received message "Please check." Will be described as a first exemplary embodiment.

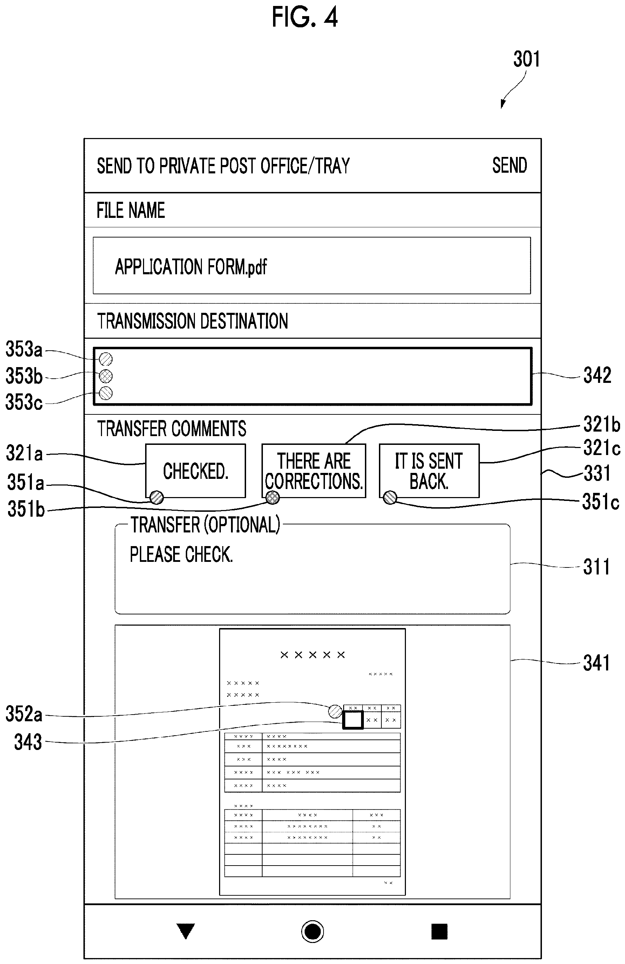

Fig. 4 is a diagram showing a screen 301 displayed on the mobile terminal 10. The screen 301 is an example of a first screen in which candidates of the reply message in response to the received message "Please check." Is displayed by the inference of the inference server 50. As illustrated, the screen 301 includes a received message display field 311, reply candidate buttons 321a to 321c, a reply message input field 331, and task information display fields 341 and 342.

The received message display field 311 is a display field for displaying a received message from another user.

The reply candidate buttons 321a to 321c are buttons indicating reply candidates that are candidates of the reply message in response to the received message. In a case where any one of the reply candidate buttons 321a to 321c is pressed, the reply message indicated by the pressed reply candidate button 321 is input for transmission to another user who is the sender of the document. Further, association icons 351a to 351c are attached to the reply candidate buttons 321a to 321c, respectively. The association icons 351a to 351c are color-coded. In Fig. 4, the colors are shown by the type of hatching. The reply candidate buttons 321a to 321c are examples of a plurality of candidate messages that are candidates of a message to be replied in response to the received message. The reply candidate button 321a is an example of a first candidate message among a plurality of candidate messages, and the reply candidate button 321c is an example of a second candidate message among the plurality of candidate messages.

The reply message input field 331 is an input field for inputting a reply candidate selected by pressing any of the reply candidate buttons 321a to 321c, as a reply message.

The task information display fields 341 and 342 are display fields for displaying task information related to the tasks to be executed in relation to transmission of the reply message.

Among these, the task information display field 341 displays the document image of the approval target associated with the received message from another user as the task information, and the document image includes an approval mark field 343. An association icon 352a is attached to the approval mark field 343. The association icon 352a has the same color as the association icon 351a, thereby indicating that the task of inputting the approval mark is associated with the reply candidate button 321a. Here, the input of the approval mark in the approval mark field 343 is an example of an operation on the document, and the approval mark field 343 is an example of a part to be edited of the document. In this case, the approval mark may be automatically input to the approval mark field 343 in response to the pressing of the reply candidate button 321a.

Further, the task information display field 342 is an area in which a transmission destination name of the approved document or the unapproved document is input as the task information. Association icons 353a to 353c are attached to the task information display field 342. The association icons 353a to 353c have the same colors as the association icons 351a to 351c, respectively, thereby indicating that the task of inputting the transmission destination of the document is associated with the reply candidate buttons 321a to 321c. In this case, the transmission destination of the document may be automatically input in response to the pressing of the reply candidate buttons 321a to 321c.

The approval mark field 343 and the task information display field 342 are examples of task information related to a plurality of tasks including tasks to be executed in relation to replying any of the plurality of candidate messages.

The approval mark field 343 and the task information display field 342 are examples of first task information related to a task to be executed in relation to replying the first candidate message. Further, the task information display field 342 is an example of second task information related to a task to be executed in relation to replying the second candidate message. Further, the screen 301 is an example of a screen in which the first task information and the second task information are displayed to be distinguished.

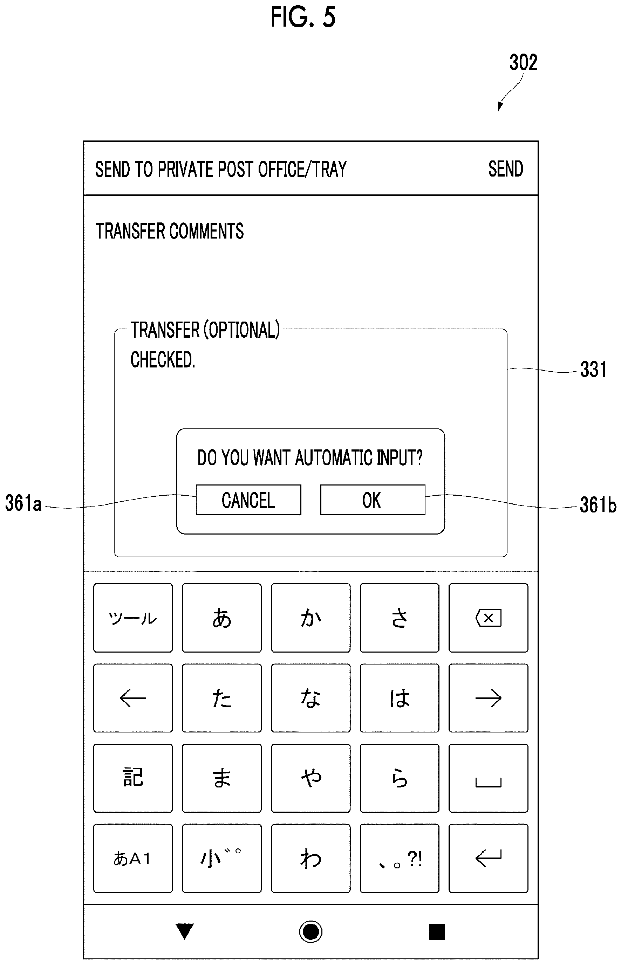

Fig. 5 is a diagram showing a screen 302 displayed on the mobile terminal 10. The screen 302 is an example of a screen displayed in a case where the reply candidate button 321a is pressed on the screen 301 of Fig. 4. As illustrated, the screen 302 includes the reply message input field 331.

Here, the reply candidate "Checked." Selected by pressing the reply candidate button 321a is input as a reply message in the reply message input field 331. Further, the reply message input field 331 includes automatic input check buttons 361a and 361b. The automatic input check button 361a is pressed in a case where the automatic input of the reply candidate as the reply message is not permitted, and the automatic input check button 361b is pressed in a case where the automatic input of the reply candidate as the reply message is permitted.

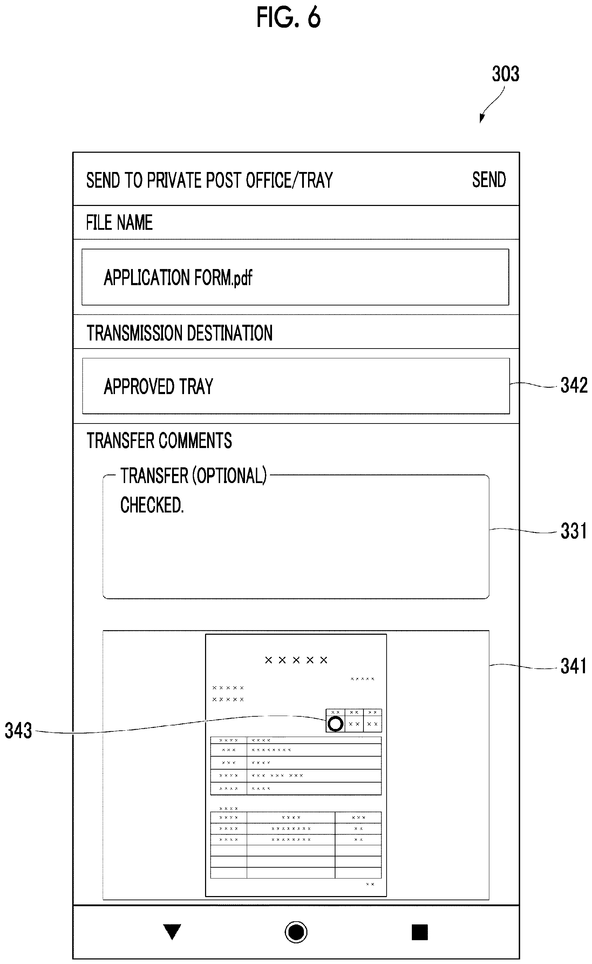

Fig. 6 is a diagram showing a screen 303 displayed on the mobile terminal 10. The screen 303 is an example of a screen displayed in a case where the automatic input check button 361b is pressed on the screen 302 of Fig. 5. As illustrated, the screen 303 includes a reply message input field 331 and task information display fields 341 and 342.

Here, the reply message "Checked." is input in the reply message input field 331 as a reply to "Please check.".

As described above, the task information display fields 341 and 342 are display fields for displaying task information related to a task to be executed in relation to transmission of the reply message.

Among these, the task information display field 341 displays the document image of the approval target associated with the received message from another user as the task information. In the document image, the approval mark is automatically input in the approval mark field 343.

In addition, the task information display field 342 displays the transmission destination name of the approved document as the task information. The transmission destination name "approved tray" is automatically input in the task information display field 342.

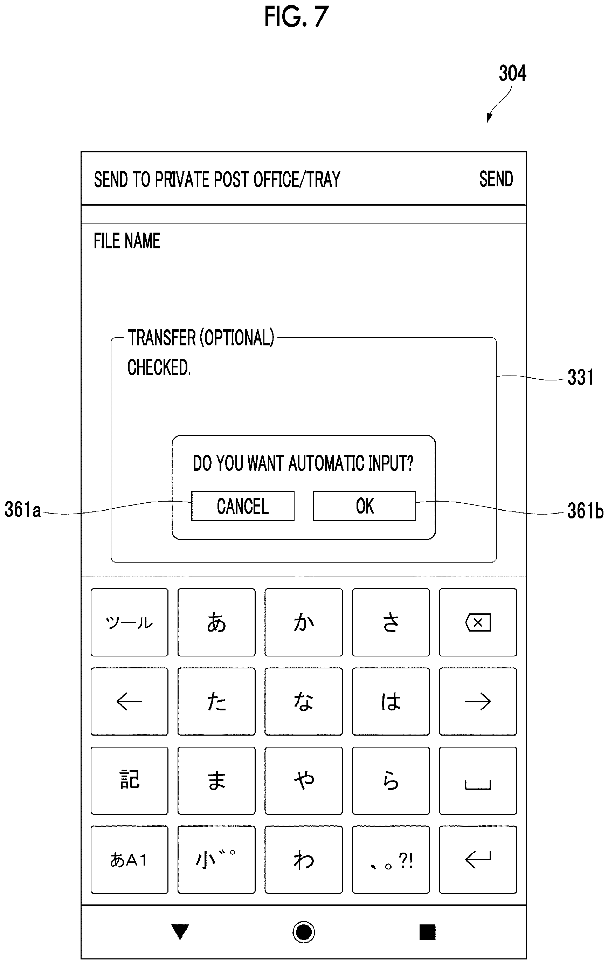

Fig. 7 is a diagram showing a screen 304 displayed on the mobile terminal 10. The screen 304 is an example of a screen displayed in a case where the reply candidate button 321c is pressed on the screen 301 of Fig. 4. As illustrated, the screen 304 includes the reply message input field 331.

Here, the reply candidate "It is sent back." selected by pressing the reply candidate button 321c is input as a reply message in the reply message input field 331. Further, the reply message input field 331 includes automatic input check buttons 361a and 361b. The automatic input check button 361a is pressed in a case where the automatic input of the reply candidate as the reply message is not permitted, and the automatic input check button 361b is pressed in a case where the automatic input of the reply candidate as the reply message is permitted.

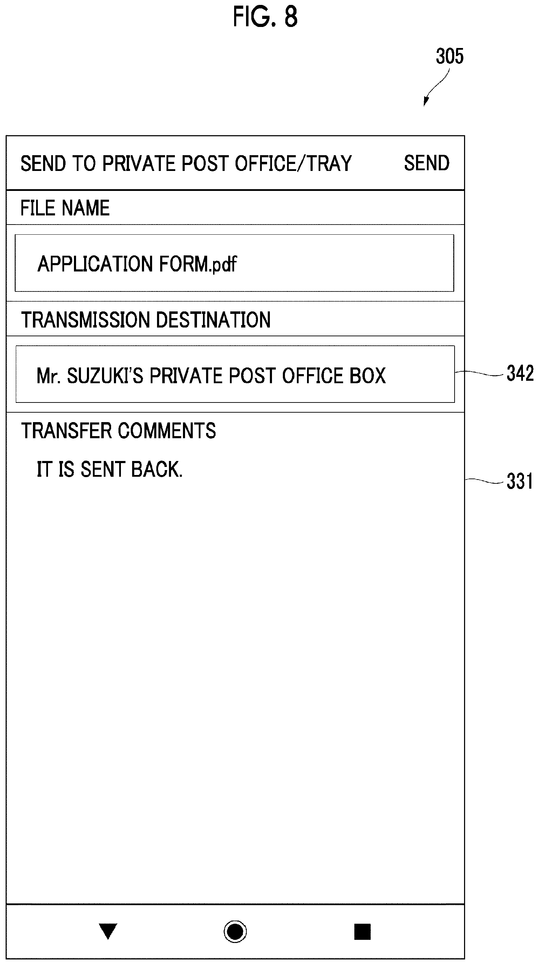

Fig. 8 is a diagram showing a screen 305 displayed on the mobile terminal 10. The screen 305 is an example of a screen displayed in a case where the automatic input check button 361b is pressed on the screen 304 of Fig. 7. As illustrated, the screen 305 includes a reply message input field 331 and a task information display field 342.

In the reply message input field 331, the reply message "It is sent back." selected by pressing the reply candidate button 321c is input as a reply to "Please check.".

As described above, the task information display field 342 is a display field for displaying task information related to a task to be executed in relation to transmission of the reply message.
the task information display field 342 displays the transmission destination name of the unapproved document as the task information. Since the reply candidate "It is sent back." is associated with a task of setting the transmission destination of the document as a storage area managed by the user who is the sender of the document, a transmission destination name "Mr. Suzuki's private post office box" is automatically input in the task information display field 342. Here, "Mr. Suzuki's private post office box" refers to a storage area managed by a user named Suzuki who is a user (that is, another user) who has transmitted the document. Thus, the document, which cannot be approved and is replied, is sent back to another user who has sent back the document for approval.

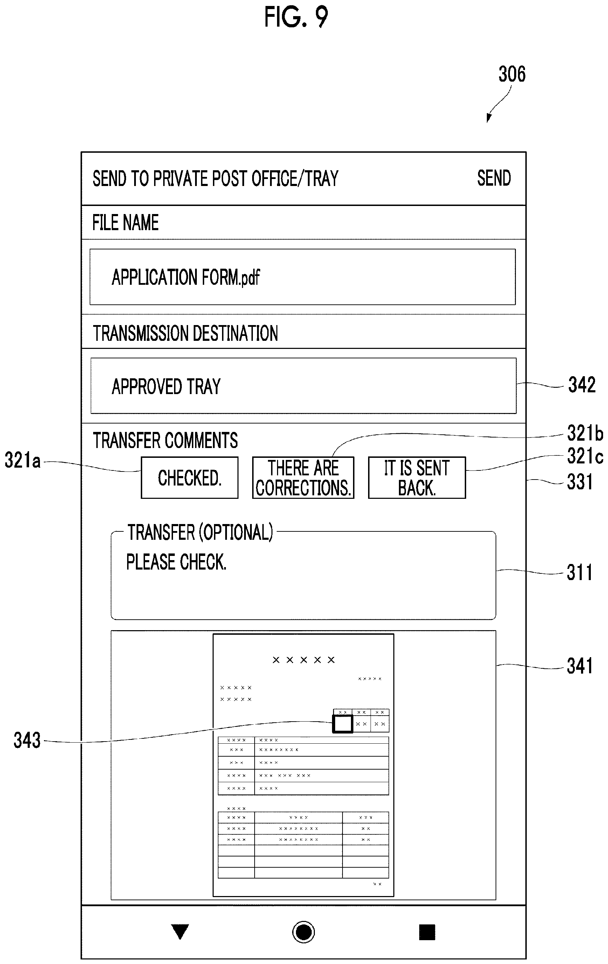

Fig. 9 is a diagram showing a screen 306 displayed on the mobile terminal 10. The screen 306 is an example of a screen in a case where the user explicitly selects the transmission destination name on the screen 301 of Fig. 4. As illustrated, the screen 306 includes the received message display field 311, the reply candidate buttons 321a to 321c, the reply message input field 331, and the task information display fields 341 and 342.

As described above, the received message display field 311 is a display field for displaying a received message from another user.

As described above, the reply candidate buttons 321a to 321c are buttons indicating reply candidates that are candidates of the reply message in response to the received message.

As described above, the reply message input field 331 is an input field for inputting a reply candidate selected by pressing any of the reply candidate buttons 321a to 321c, as a reply message.

As described above, the task information display fields 341 and 342 are display fields for displaying task information related to a task to be executed in relation to transmission of the reply message.

Among these, the task information display field 341 displays the document image of the approval target associated with the received message from another user as the task information, and the document image includes an approval mark field 343. The approval mark field 343 is highlighted to indicate that the approval mark is automatically input by the inference of the inference server 50. In Fig. 9, the approval mark field 343 is highlighted by highlighting, and this is shown by enclosing the approval mark field 343 in a thick frame. Here, the input of the approval mark in the approval mark field 343 is an example of an operation on the document, and the approval mark field 343 is an example of a part to be edited of the document.

In addition, the task information display field 342 displays the transmission destination name of the approved document or the unapproved document as the task information. Here, the user selects "approved tray" as the transmission destination name.

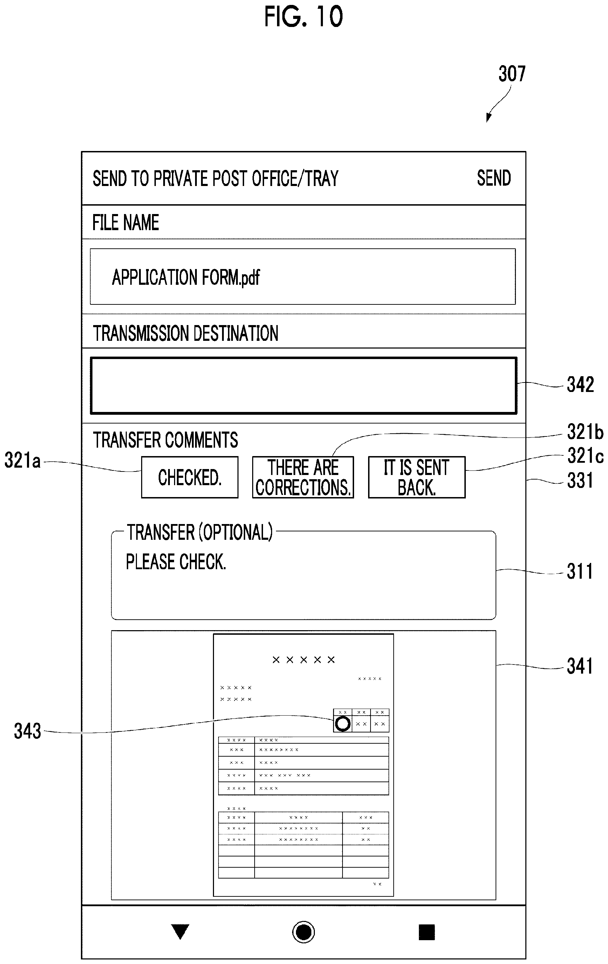

Fig. 10 is a diagram showing a screen 307 displayed on the mobile terminal 10. The screen 307 is an example of a screen in a case where the user explicitly assigns an approval mark to the document image on the screen 301 of Fig. 4. As illustrated, the screen 307 includes a received message display field 311, reply candidate buttons 321a to 321c, a reply message input field 331, and task information display fields 341 and 342.

As described above, the received message display field 311 is a display field for displaying a received message from another user.

As described above, the reply candidate buttons 321a to 321c are buttons indicating reply candidates that are candidates of the reply message in response to the received message.

As described above, the reply message input field 331 is an input field for inputting a reply candidate selected by pressing any of the reply candidate buttons 321a to 321c, as a reply message.

As described above, the task information display fields 341 and 342 are display fields for displaying task information related to a task to be executed in relation to transmission of the reply message.

Among these, the task information display field 341 displays the document image of the approval target associated with the received message from another user as the task information, and the document image includes an approval mark field 343. Here, the user marks the approval mark field 343 with a "○" stamp.

In addition, the task information display field 342 displays the transmission destination name of the approved document or the unapproved document as the task information. The task information display field 342 is highlighted to indicate that the transmission destination name is automatically input by the inference of the inference server 50. In Fig. 10, the task information display field 342 is highlighted by highlighting, and this is shown by enclosing the task information display field 342 in a thick frame.

In the following, an example in which the task information is displayed in association with the candidate message will be described in a second screen aspect different from the first exemplary embodiment as the second exemplary embodiment.

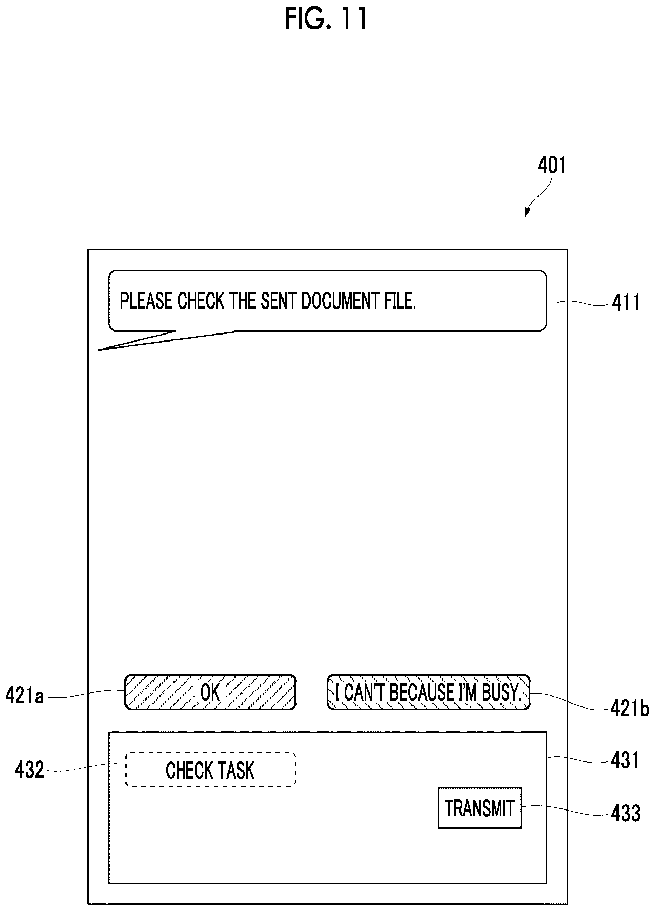

Fig. 11 is a diagram showing a screen 401 displayed on the mobile terminal 10. The screen 401 is an example of a second screen on which candidates of the reply message are displayed by the inference of the inference server 50. As illustrated, the screen 401 includes a received message display field 411, reply candidate buttons 421a and 421b, and a reply message input field 431.

The received message display field 411 is a display field for displaying a received message from another user.

The reply candidate buttons 421a and 421b are buttons indicating reply candidates that are candidates of the reply message in response to the received message. Further, the reply candidate buttons 421a and 421b are color-coded. In Fig. 11, the colors are shown by the type of hatching. The reply candidate buttons 421a and 421b may be colored in a case where the screen 401 is first displayed. The reply candidate buttons 421a and 421b are examples of a plurality of candidate messages that are candidates of a message to be replied in response to the received message. The reply candidate button 421a is an example of a first candidate message among a plurality of candidate messages, and the reply candidate button 421b is an example of a second candidate message among the plurality of candidate messages.

The reply message input field 431 is an input field for inputting a reply candidate selected by pressing any of the reply candidate buttons 421a and 421b, as a reply message. The reply message input field 431 includes a task check button 432 and a send button 433.

The task check button 432 is a button for checking the task associated with the reply candidate buttons 421a and 421b. The task check button 432 is an example of display elements other than the plurality of candidate messages.

The send button 433 is a button for transmitting a reply message input by pressing the reply candidate buttons 421a and 421b.

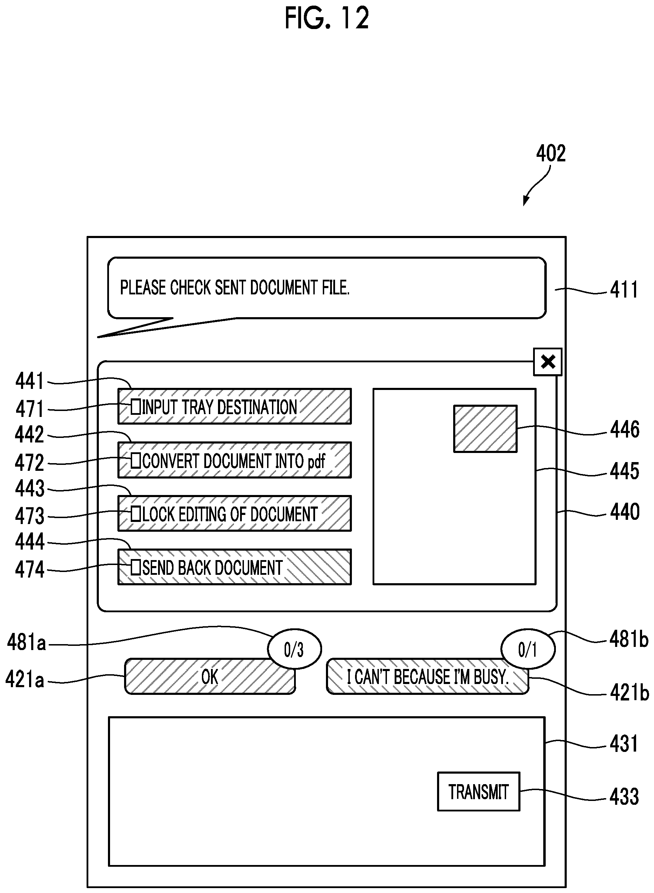

Fig. 12 is a diagram showing a screen 402 displayed on the mobile terminal 10. The screen 402 is an example of a screen displayed in a case where the task check button 432 is pressed on the screen 401 of Fig. 11. The screen 402 is an example of a screen for displaying task information in response to an operation on a display element other than a plurality of candidate messages. As illustrated, the screen 402 includes a received message display field 411, reply candidate buttons 421a and 421b, a reply message input field 431, and a task information list display field 440.

As described above, the received message display field 411 is a display field for displaying a received message from another user.

As described above, the reply candidate buttons 421a and 421b are buttons indicating reply candidates that are candidates of the reply message in response to the received message.

As described above, the reply message input field 431 is an input field for inputting a reply candidate selected by pressing any of the reply candidate buttons 421a and 421b, as a reply message.

The task information list display field 440 is a display field for displaying a list of task information related to a task to be executed in relation to transmission of the reply message. The task information list display field 440 includes task information display fields 441 to 445 for displaying task information.

Among these, the task information display fields 441 to 444 display task items indicating the task contents in words, as task information. Further, the task information display field 445 displays a document image to be approved as task information, and the document image includes an approval mark field 446.

The task information display fields 441 to 443 have the same color as the reply candidate button 421a, thereby indicating that the tasks of the task information display fields 441 to 443 are associated with the reply candidate of the reply candidate button 421a. Further, the approval mark field 446 also has the same color as the reply candidate button 421a, thereby indicating that the task of marking the approval mark is associated with the reply candidate of the reply candidate button 421a. Here, the input of the approval mark in the approval mark field 446 is an example of an operation on the document, and the approval mark field 446 is an example of a part to be edited of the document. The task information display fields 441 to 443 and the approval mark fields 446 may be colored in a case where the screen 402 is first displayed.

On the other hand, the task information display field 444 has the same color as the reply candidate button 421b, thereby indicating that the task in the task information display field 444 is associated with the reply candidate of the reply candidate button 421b. The task information display field 444 may be colored in a case where the screen 402 is first displayed.
the task information display fields 441 to 444 and the approval mark fields 446 are examples of task information related to a plurality of tasks including tasks to be executed in relation to replying any of the plurality of candidate messages.
the task information display fields 441 to 443 and the approval mark fields 446 are examples of first task information related to a task to be executed in relation to replying the first candidate message. Further, the task information display field 444 is an example of second task information related to a task to be executed in relation to replying the second candidate message. Further, the screen 402 is an example of a screen in which the first task information and the second task information are displayed to be distinguished.

The screen 402 is an example of a screen in which the first task information and the second task information are displayed to be distinguished according to a display mode in a case where the first task information and the second task information are displayed. A display mode other than color can be considered, but here, color is used as an example.

In addition, check boxes 471 to 474 are provided in the task information display fields 441 to 444, respectively. Checks are performed in the check boxes 471 to 474, respectively, in a case where the task displayed in the task information display fields 441 to 444 has been executed.

The screen 402 is an example of a screen in which the task information related to the unexecuted tasks and the task information related to the executed tasks are displayed to be distinguished, among the tasks to be executed in relation to replying the candidate message.

Alternatively, among the task information display fields 441 to 444, the task information display fields in which the displayed a task has been executed may not be displayed.

Further, the reply candidate buttons 421a and 421b are respectively provided with ratio icons 481a and 481b. The ratio icons 481a and 481b are icons indicating the ratio of the executed tasks to the tasks associated with the reply candidate buttons 421a and 421b, among the tasks displayed in the task information display fields 441 to 444.

In this case, among the tasks displayed in the task information display fields 441 to 444, there are three tasks associated with the reply candidate button 421a, but there is no task that has been executed, so that the ratio icon 481a is set to "0/3".

Further, among the tasks displayed in the task information display fields 441 to 444, there is one task associated with the reply candidate button 421b, but there is no task that has been executed, so that the ratio icon 481b is set to "0/1".

Further, the ratio icons 481a and 481b may be icons indicating the ratio of the unexecuted tasks to the tasks associated with the reply candidate buttons 421a and 421b, among the tasks displayed in the task information display fields 441 to 444.

The screen 402 is an example of a screen that further displays the ratio of the unexecuted tasks or the executed tasks to the task to be executed in relation to replying the candidate message.

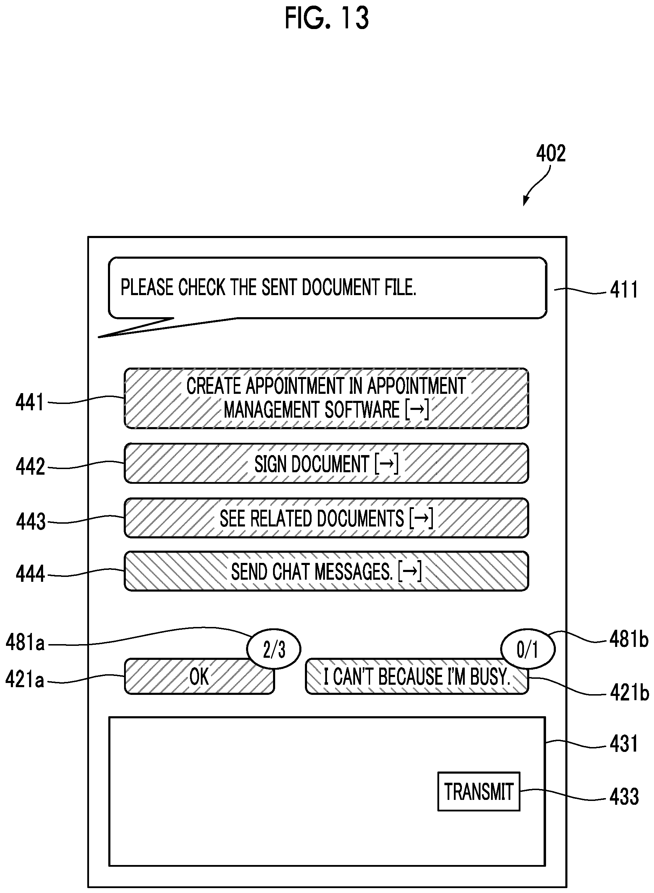

Fig. 13 is a diagram showing a screen 403 displayed on the mobile terminal 10. The screen 403 is an example of a third screen on which candidates of the reply message are displayed by the inference of the inference server 50. As illustrated, the screen 403 includes a received message display field 411, reply candidate buttons 421a and 421b, a reply message input field 431, and task information display fields 441 to 444.

The received message display field 411 is a display field for displaying a received message from another user.

The reply candidate buttons 421a and 421b are buttons indicating reply candidates that are candidates of the reply message in response to the received message. Further, the reply candidate buttons 421a and 421b are color-coded. In Fig. 13, the colors are shown by the type of hatching. The reply candidate buttons 421a and 421b are examples of a plurality of candidate messages that are candidates of a message to be replied in response to the received message. The reply candidate button 421a is an example of a first candidate message among a plurality of candidate messages, and the reply candidate button 421b is an example of a second candidate message among the plurality of candidate messages.

The reply message input field 431 is an input field for inputting a reply candidate selected by pressing any of the reply candidate buttons 421a and 421b, as a reply message. The reply message input field 431 includes the send button 433.

The send button 433 is a button for transmitting a reply message input by pressing the reply candidate buttons 421a and 421b.
the task information display fields 441 to 444 display task items indicating a task contents in words, as task information.
the task information display fields 441 to 443 have the same color as the reply candidate button 421a, thereby indicating that the tasks of the task information display fields 441 to 443 are associated with the reply candidate button 421a.

On the other hand, the task information display field 444 has the same color as the reply candidate button 421b, thereby indicating that the task in the task information display field 444 is associated with the reply candidate button 421b.
the task information display fields 441 to 444 are examples of task information related to a plurality of tasks including tasks to be executed in relation to replying any of the plurality of candidate messages.
the task information display fields 441 to 443 are examples of first task information related to a task to be executed in relation to replying the first candidate message. Further, the task information display field 444 is an example of second task information related to a task to be executed in relation to replying the second candidate message. Further, the screen 403 is an example of a screen in which the first task information and the second task information are displayed to be distinguished.

The screen 403 is an example of a screen in which the first task information and the second task information are displayed to be distinguished according to a display mode in a case where an operation on the first candidate message is performed. A display mode other than color can be considered, but here, color is used as an example.

Further, the reply candidate buttons 421a and 421b are respectively provided with ratio icons 481a and 481b. The ratio icons 481a and 481b are icons indicating the ratio of executed tasks among the tasks associated with the reply candidate buttons 421a and 421b, respectively.

In this case, among the tasks displayed in the task information display fields 441 to 444, there are three tasks associated with the reply candidate button 421a and two tasks that have been executed, so that the ratio icon 481a is set to "2/3".

Further, among the tasks displayed in the task information display fields 441 to 444, there is one task associated with the reply candidate button 421b and there is no task that has been executed, so that the ratio icon 481b is set to "0/1".

The ratio icons 481a and 481b may be icons indicating the ratio of unexecuted tasks among the tasks associated with the reply candidate buttons 421a and 421b, respectively.

The screen 403 is an example of a screen that further displays the ratio of the unexecuted tasks or the executed tasks to the task to be executed in relation to replying the candidate message.

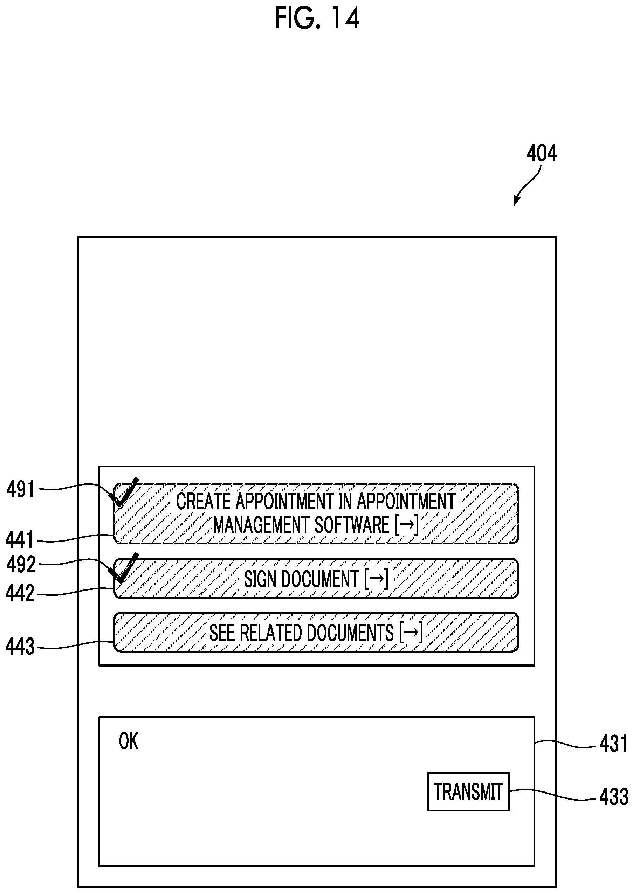

Fig. 14 is a diagram showing a screen 404 displayed on the mobile terminal 10. The screen 404 is an example of a screen displayed in a case where the reply candidate button 421a is pressed on the screen 403 of Fig. 13. As illustrated, the screen 404 includes a reply message input field 431 and task information display fields 441 to 443.

As described above, the reply message input field 431 is an input field for inputting a reply candidate selected by pressing any of the reply candidate buttons 421a and 421b, as a reply message. Here, "OK" is input by pressing the reply candidate button 421a.
the task information display fields 441 to 443 display the task information display fields 441 to 443 of Fig. 13, as task information related to the task associated with the reply candidate button 421a. Among these, check marks 491 and 492 are attached to the task information display fields 441 and 442, respectively. Accordingly, there are three tasks associated with the reply candidate button 421a, and it can be seen that the tasks displayed in the task information display fields 441 and 442 are executed.

The screen 404 is an example of a screen in which the task information related to the unexecuted tasks and the task information related to the executed tasks are displayed to be distinguished, among the tasks to be executed in relation to replying the candidate message.

Alternatively, among the task information display fields 441 to 444, the task information display fields in which the displayed a task has been executed may not be displayed.

In this case, the screen 404 is an example of a screen for displaying the task information related to the unexecuted tasks and for not displaying the task information related to the executed tasks, among the tasks to be executed in relation to replying the candidate message.

As the tasks executed in a case where the reply candidate buttons 321a to 321c are pressed in the examples of Figs. 4 to 10 and the tasks executed in a case where the reply candidate buttons 421a and 421b are pressed in the examples of Figs. 11 to 14, in addition to the illustrated tasks, the following tasks can be considered.

The first is the task of changing the document file name. For example, a case where "application form_draft.pdf" is changed to "application form.pdf" is applicable.

The second is the task of making the document file monochrome. For example, in the case of final printing, the document file is made monochrome so as to be reliably printed in black and white in order to reduce the cost.

The third is the task of compressing the document file. For example, the capacity of a document file is reduced in order to save the capacity of cloud storage.

The fourth is the task of printing the document file. For example, a document file is printed on paper for original management.

Further, although the reply candidate buttons 321a to 321c are arranged side by side in the examples of Figs. 4 to 10 and the reply candidate buttons 421a and 421b are arranged side by side in the examples of Figs. 11 to 14, on the screen, the present invention is not limited thereto. One of the three reply candidates in the examples of Figs. 4 to 10 and one of the two reply candidates in the examples of Figs. 11 to 14 may be respectively placed on the screen, and the other reply candidates may be selected by using a pull-down menu or the like.

### [Functional Configuration of Mobile Terminal]

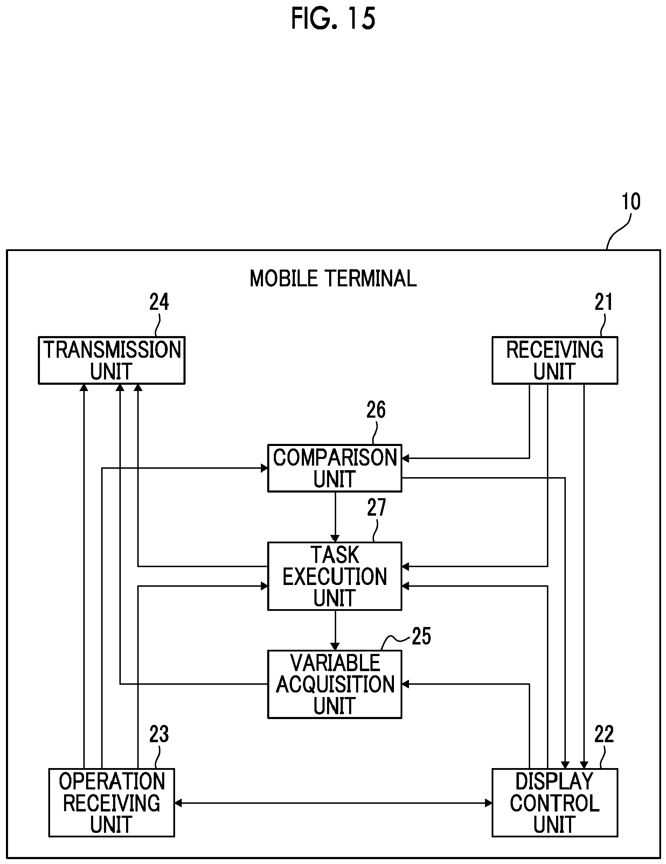

Fig. 15 is a block diagram showing a functional configuration example of the mobile terminal 10 that performs such a schematic operation. As shown in Fig. 15, the mobile terminal 10 includes a receiving unit 21, a display control unit 22, an operation receiving unit 23, a transmission unit 24, a variable acquisition unit 25, a comparison unit 26, and a task execution unit 27.

The receiving unit 21 receives a message from another user and stores the message as a received message. At this time, the receiving unit 21 may receive the received message together with a document file that is the target of the task described in the received message. In the present exemplary embodiment, this function of the receiving unit 21 is used as an example of the function of acquiring a received message that is a message received.

Further, in a case where the inference server 50 infers reply candidates which are candidates of a reply message to the received message, the receiving unit 21 receives the reply candidates from the inference server 50. Then, the receiving unit 21 stores the reply candidate in association with the received document file together with the received message. In the present exemplary embodiment, reply candidates are used as an example of candidate messages that are candidates of a message to be replied in response to a received message. Further, in the present exemplary embodiment, a reply candidate is used as an example of the candidate message associated with the document.

Further, in a case where the inference server 50 infers the task content to be executed in replying the reply candidate as a reply message, the receiving unit 21 receives the task content from the inference server 50.

The display control unit 22 controls the touch panel 14 to display, in response to a received message that the receiving unit 21 receives from another user, a transmission destination screen for transmitting a reply message with the user as a transmission destination.

Further, the display control unit 22 controls the touch panel 14 to display a screen including a plurality of reply candidates received by the receiving unit 21 from the inference server 50. In the present exemplary embodiment, this function of the display control unit 22 is used as an example of a function of controlling the display of the candidate message.

In this case, the display control unit 22 controls the touch panel 14 to display task information related to a task to be executed in replying the reply candidate as a reply message on this screen in association with the reply candidate. Here, the task information may be specified by the inference of the inference server 50, or may be specified by being associated with the reply candidate in advance. In the present exemplary embodiment, this function of the display control unit 22 is used as an example of a function of controlling to display task information related to a task to be executed in relation to replying the candidate message in association with the candidate message.

Further, the display control unit 22 may control the touch panel 14 to display a check dialog for checking whether or not to automatically input the reply message and the task content.

Furthermore, the display control unit 22 may control the touch panel 14 to display a warning dialog in which a warning is given, in a case where the task content input by the user does not match the task content received from the inference server 50.

The operation receiving unit 23 receives an operation in which the user selects any reply candidate from a plurality of reply candidates, in a case where a screen including a plurality of reply candidates is displayed on the touch panel 14.

In this case, the operation receiving unit 23 may receive an operation in which the user inputs a task content.

Further, in a case where the check dialog is displayed on the touch panel 14, the operation receiving unit 23 receives an operation of inputting whether or not the automatic input is permitted by the user.

Further, in a case where the warning dialog is displayed on the touch panel 14, the operation receiving unit 23 receives an operation of inputting whether or not to permit execution of the task content input by the user.

The transmission unit 24 transmits an explanatory variable to the inference server 50 in order to cause the inference server 50 to infer a reply candidate of the received message as an objective variable.

Further, the transmission unit 24 transmits the explanatory variable to the inference server 50 in order to cause the inference server 50 to infer the task content to be executed in replying the reply candidate as the reply message, as an objective variable.

Further, the transmission unit 24 transmits an explanatory variable and an objective variable to the inference server 50 in order to cause the inference server 50 to relearn the model.

Furthermore, the transmission unit 24 transmits a reply message to another user.

The variable acquisition unit 25 acquires explanatory variables for causing the inference server 50 to infer reply candidates of the received message, from the screen displayed on the touch panel 14 by the display control unit 22.

Further, the variable acquisition unit 25 acquires explanatory variables for causing the inference server 50 to infer the task content to be executed in replying the reply candidate as the reply message, from the screen displayed on the touch panel 14 by the display control unit 22.

Further, the variable acquisition unit 25 acquires explanatory variables and objective variables for causing the inference server 50 to relearn the model, from the screen displayed on the touch panel 14 by the display control unit 22.

The comparison unit 26 may compare whether or not the task content received by the receiving unit 21 from the inference server 50 matches the task content received by the operation receiving unit 23.
the task execution unit 27 executes the task content received from the inference server 50 by the receiving unit 21 or the task content received by the operation receiving unit 23. In the present exemplary embodiment, the task execution unit 27 is used as an example of a function of executing a task corresponding to the task information displayed in association with the candidate message, in response to an operation on the candidate message.

Further, the task execution unit 27 may manage whether each a task has not been executed or has been executed, and exclude the explanatory variable related to the executed tasks, from explanatory variables for causing the inference server 50 to infer, acquired by the variable acquisition unit 25.

### [Operation Example of Task Information Proposal System]

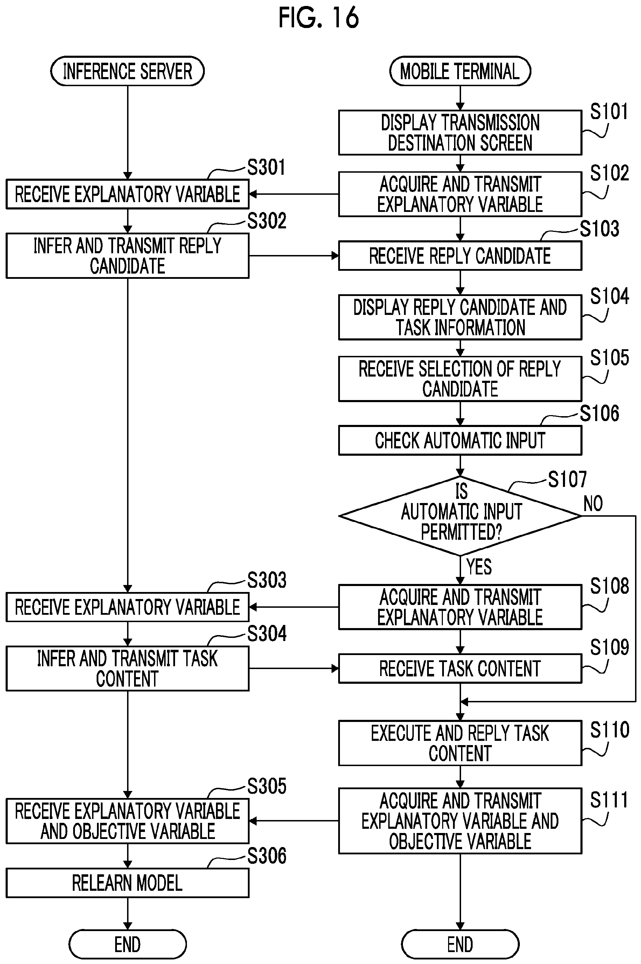

Fig. 16 is a sequence diagram showing a first operation example of the task information proposal system 1. This operation example is started in a case where the mobile terminal 10 receives a message from another user and tries to reply to the message.

As shown in Fig. 16, first, the mobile terminal 10 displays a transmission destination screen (step S101). Specifically, the display control unit 22 controls the touch panel 14 to display the transmission destination screen by a user operation. Here, the transmission destination screen is a screen for transmitting a reply message in response to a received message from another user with that user as the transmission destination. In the example of Figs. 4 to 8, the transmission destination screen corresponds to a screen before the reply candidate buttons 321a to 321c and the task information display fields 341 to 343 are displayed in Fig. 4. Further, in the example of Figs. 11 to 14, the transmission destination screen corresponds to a screen before the reply candidate buttons 421a and 421b and the task information display fields 441 to 444 are displayed in Figs. 11 and 13.

Next, the mobile terminal 10 acquires an explanatory variable from the transmission destination screen displayed in step S101, and transmits the explanatory variable to the inference server 50 (step S102). Specifically, the variable acquisition unit 25 acquires the explanatory variable from the transmission destination screen, and the transmission unit 24 transmits the explanatory variable to the inference server 50 via the wireless circuit 18. Here, the explanatory variable may be a received message in both the examples of Figs. 4 to 8 and the examples of Figs. 11 to 14.

Accordingly, the inference server 50 receives the explanatory variable transmitted in step S102 (step S301).

Then, the inference server 50 infers a reply candidate which is a candidate of the reply message as an objective variable, based on the explanatory variable received in step S301, and transmits the reply candidate to the mobile terminal 10 (step S302).

Then, the mobile terminal 10 receives the reply candidate transmitted in step S302 (step S103). Specifically, the receiving unit 21 receives the reply candidate from the inference server 50 via the wireless circuit 18.

Next, the mobile terminal 10 displays a screen including the reply candidate received in step S103 and task information related to the task to be executed in a case of transmitting the reply candidate as a reply message (step S104). Specifically, the display control unit 22 controls the touch panel 14 to display a screen including the reply candidate and the task information. Here, the reply candidates correspond to the reply candidates indicated by the reply candidate buttons 321a to 321c in the examples of Figs. 4 to 8, and the reply candidates correspond to the reply candidates indicated by the reply candidate buttons 421a and 421b in the examples of Figs. 11 to 14. Further, the task information is, for example, an area or data on a screen that is a target of the task, a task item indicating the content of the task in a word, or the like. The mobile terminal 10 may specify the task information by the inference of the inference server 50, or may specify the task information by associating the reply candidate with the reply candidate in advance. The display control unit 22 may control the touch panel 14 so as to highlight the task information. Here, the task information corresponds to the approval mark field 343 and the task information display field 342 of the task information display field 341 in the examples of Figs. 4 to 8, and the task information corresponds to the task information display field 441 to 444 and the approval mark field 446 of the task information display field 445 in the examples of Figs. 11 to 14.

Next, the mobile terminal 10 receives the user's selection from the reply candidates displayed in step S104 (step S105). Specifically, in a case where the user selects a reply candidate, the operation receiving unit 23 receives the selection. The user may directly input texts, without selecting the reply candidate.

Next, the mobile terminal 10 checks whether or not to perform the automatic input including the task by inference (step S106). Specifically, the display control unit 22 controls the touch panel 14 to display a check dialog as to whether or not automatic input is to be performed. Here, the check dialog corresponds to the screen of Fig. 5 or Fig. 7, in the examples of Fig. 4 to Fig. 8.

Then, the mobile terminal 10 determines whether or not the automatic input is permitted (step S107). Specifically, the operation receiving unit 23 determines whether or not the OK button is tapped in the check dialog. Here, the OK button corresponds to the automatic input check button 361b of Fig. 5 or Fig. 7 in the examples of Figs. 4 to 8. By checking whether or not the automatic input is performed in this way, it is possible to prevent an unexpected automatic input from being performed. Alternatively, instead of pressing the OK button in the check dialog, automatic input may be permitted by, for example, a shake gesture (an operation of shaking the mobile terminal 10).

In a case where it is determined in step S107 that the automatic input is permitted, the mobile terminal 10 advances the process to step S108. Alternatively, the mobile terminal 10 may advance the process to step S108 without executing steps S106 and S107.

Therefore, the mobile terminal 10 acquires an explanatory variable from the screen displayed in step S104, and transmits the explanatory variable to the inference server 50 (step S108). Specifically, the variable acquisition unit 25 acquires the explanatory variable from the screen, and the transmission unit 24 transmits the explanatory variable to the inference server 50 via the wireless circuit 18. Here, in the example of Figs. 4 to 8, the explanatory variables may be the sender, the transmission source tray, the reception tray, and the reply message.

Accordingly, the inference server 50 receives the explanatory variable transmitted in step S108 (step S303).

Then, the inference server 50 infers the task content as the objective variable, based on the explanatory variable received in step S303, and transmits the task content to the mobile terminal 10 (step S304). Specifically, the inference server 50 performs an inference process by using machine learning (classification) such as a random forest or a gradient boosting tree, based on a character string input as an explanatory variable. In this case, the inference process may be performed by applying a filter for each user, and by doing so, it can be expected that irrelevant inference is excluded. Here, in the example of Figs. 4 to 8, the objective variables may be the input of the approval mark to the approval mark field 343 in Fig. 6, the input of "approved tray" to the task information display field 342, or the input of "Mr. Suzuki's private post office box" to the task information display field 342 in Fig. 8. Further, in the example of Figs. 11 to 14, the objective variable may be execution of the task contents in the task information display fields 441 to 444 in Figs. 12 and input of the approval mark in the approval mark field 446, or execution of the task contents of the task information display fields 441 to 444 in Figs. 13.

Then, the mobile terminal 10 receives the task content transmitted in step S304 (step S109). Specifically, the receiving unit 21 receives the task content via the wireless circuit 18.

Next, the mobile terminal 10 executes the task content and transmits the automatically input reply message (step S110). Further, even in a case where the automatic input is not permitted in step S107, the mobile terminal 10 executes the task content and transmits the reply message input by the user (step S110). Specifically, first, the task execution unit 27 executes the task content. That is, in the examples of Figs. 4 to 8, the task execution unit 27 automatically inputs the approval mark to the approval mark field 343 in Fig. 6 and automatically inputs "approved tray" to the task information display field 342, or automatically inputs "Mr. Suzuki's private post office box" to the task information display field 342 in Fig. 8. In this case, the display control unit 22 may highlight the automatic input location to be understood by the user. By highlighting in this way, the user is able to check which part has been changed. Then, in a case where the user instructs to transmit the reply message, the transmission unit 24 transmits the reply message to another user via the wireless circuit 18.

After that, the mobile terminal 10 transmits the explanatory variable and the objective variable input at this time to the inference server 50 (step S111). Specifically, the variable acquisition unit 25 acquires the explanatory variable and the objective variable from the screen displayed in step S109, and the transmission unit 24 transmits the explanatory variable and the objective variable to the inference server 50 via the wireless circuit 18. Here, in the example of Figs. 4 to 8, the explanatory variables may be the sender, the transmission source tray, the reception tray, and the reply message. Further, in the example of Figs. 4 to 8, the objective variables may be the input of the approval mark to the approval mark field 343 in Fig. 6, the input of "approved tray" to the task information display field 342, or the input of "Mr. Suzuki's private post office box" to the task information display field 342.

Accordingly, the inference server 50 receives the explanatory variable and the objective variable transmitted in step 5111 (step S305).

Then, the inference server 50 relearns the model used for inference, by using the explanatory variable and the objective variable received in step S305 (step S306). By doing so, it can be expected that the accuracy of the next inference will be improved.

With the above operation, the task content can be automatically executed by using the reply candidate selected by the user as a trigger, and the number of operation steps can be significantly reduced. Further, by performing machine learning (classification), prior data and a task definition become unnecessary.

In this operation example, the inference server 50 performs the inference processing, but the mobile terminal 10 may perform the inference processing.

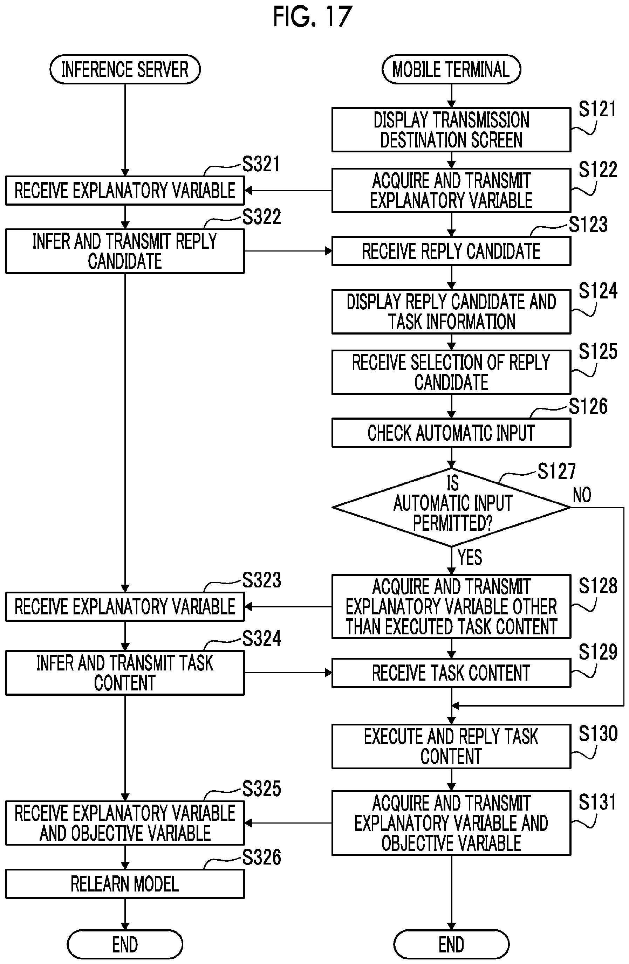

Fig. 17 is a sequence diagram showing a second operation example of the task information proposal system 1. This operation example is also started in a case where the mobile terminal 10 receives a message from another user and tries to reply to the message.

As shown in Fig. 17, first, the mobile terminal 10 displays a transmission destination screen (step S121). Specifically, the display control unit 22 controls the touch panel 14 to display the transmission destination screen by a user operation. Here, the transmission destination screen is a screen for transmitting a reply message in response to a received message from another user with that user as the transmission destination. In the example of Figs. 9 and 10, the transmission destination screen corresponds to a screen before the reply candidate buttons 321a to 321c and the task information display fields 341 to 343 are displayed. Further, in the example of Figs. 11 to 14, the transmission destination screen corresponds to a screen before the reply candidate buttons 421a and 421b and the task information display fields 441 to 444 are displayed in Figs. 11 and 13.

Next, the mobile terminal 10 acquires an explanatory variable from the transmission destination screen displayed in step S121, and transmits the explanatory variable to the inference server 50 (step S122). Specifically, the variable acquisition unit 25 acquires the explanatory variable from the transmission destination screen, and the transmission unit 24 transmits the explanatory variable to the inference server 50 via the wireless circuit 18. Here, the explanatory variable may be a received message in both the examples of Figs. 9 and 10 and the examples of Figs. 11 to 14.

As a result, the inference server 50 receives the explanatory variable transmitted in step S122 (step S321).

Then, the inference server 50 infers a reply candidate which is a candidate of the reply message as an objective variable, based on the explanatory variable received in step S321, and transmits the reply candidate to the mobile terminal 10 (step S322).

Then, the mobile terminal 10 receives the reply candidate transmitted in step S322 (step S123). Specifically, the receiving unit 21 receives the reply candidate from the inference server 50 via the wireless circuit 18.

Next, the mobile terminal 10 displays a screen including the reply candidate received in step S123 and task information related to the task to be executed in a case of transmitting the reply candidate as a reply message (step S124). Specifically, the display control unit 22 controls the touch panel 14 to display a screen including the reply candidate and the task information. Here, the reply candidates correspond to the reply candidates indicated by the reply candidate buttons 321a to 321c in the examples of Figs. 9 and 10, and the reply candidates correspond to the reply candidates indicated by the reply candidate buttons 421a and 421b in the examples of Figs. 11 to 14. Further, the task information is, for example, an area or data on a screen that is a target of the task, a task item indicating the content of the task in a word, or the like. The mobile terminal 10 may specify the task information by the inference of the inference server 50, or may specify the task information by associating the reply candidate with the reply candidate in advance. The display control unit 22 may control the touch panel 14 so as to highlight the task information. Here, the task information corresponds to the approval mark field 343 and the task information display field 342 of the task information display field 341 in the examples of Figs. 9 and 10, and the task information corresponds to the task information display field 441 to 444 and the approval mark field 446 of the task information display field 445 in the examples of Figs. 11 to 14.

Next, the mobile terminal 10 receives the user's selection from the reply candidates displayed in step S 124 (step S125). Specifically, in a case where the user selects a reply candidate, the operation receiving unit 23 receives the selection. The user may directly input texts, without selecting the reply candidate.

Next, the mobile terminal 10 checks whether or not to perform the automatic input including the task by inference (step S126). Specifically, the display control unit 22 controls the touch panel 14 to display a check dialog as to whether or not automatic input is to be performed.

Then, the mobile terminal 10 determines whether or not the automatic input is permitted (step S127). Specifically, the operation receiving unit 23 determines whether or not the OK button is tapped in the check dialog. By checking whether or not the automatic input is performed in this way, it is possible to prevent an unexpected automatic input from being performed. Alternatively, instead of pressing the OK button in the check dialog, automatic input may be permitted by, for example, a shake gesture (an operation of shaking the mobile terminal 10).

In a case where it is determined in step S127 that the automatic input is permitted, the mobile terminal 10 advances the process to step S128. Alternatively, the mobile terminal 10 may advance the process to step S 128 without executing steps S 126 and S 127.

Therefore, the mobile terminal 10 acquires explanatory variables other than the executed task contents from the screen displayed in step S124, and transmits the explanatory variables to the inference server 50 (step S128). Specifically, the variable acquisition unit 25 acquires explanatory variables from the screen, and the task execution unit 27 determines whether or not there is a task content that has been executed. Then, in a case where it is determined that there is no a task content that has been executed, the transmission unit 24 transmits this explanatory variable as it is to the inference server 50 via the wireless circuit 18. Further, in a case where it is determined that there is the task content that has been executed, the variable acquisition unit 25 excludes the explanatory variable of the task content that has been executed from the explanatory variables, and the transmission unit 24 transmits the excluded explanatory variable to the inference server 50 via the wireless circuit 18. Here, in the example of Fig. 9, the explanatory variables may be the inputs of the sender, the transmission source tray, the reception tray, the reply message, and "approved tray" to the task information display field 342. In addition, in the example of Fig. 10, the explanatory variables may be the inputs of the sender, the transmission source tray, the reception tray, the reply message, and the approval mark to the approval mark field 343. In a case where both the input of the "approved tray" in the task information display field 342 and the input of the approval mark in the approval mark field 343 are performed, the mobile terminal 10 advances the process to step S130.

Accordingly, the inference server 50 receives the explanatory variable transmitted in step S128 (step S323).

Then, the inference server 50 infers the task content as the objective variable, based on the explanatory variable received in step S323, and transmits the task content to the mobile terminal 10 (step S324). Specifically, the inference server 50 performs an inference process by using machine learning (classification) such as a random forest or a gradient boosting tree, based on a character string input as an explanatory variable. In this case, the inference process may be performed by applying a filter for each user, and by doing so, it can be expected that irrelevant inference is excluded. Here, the obj ective variables may be the input of the approval mark to the approval mark field 343 in the example of Fig. 9 and the input of the "approved tray" in the task information display field 342 in the example of Fig. 10.

Then, the mobile terminal 10 receives the task content transmitted in step S324 (step S129). Specifically, the receiving unit 21 receives the task content via the wireless circuit 18.

Next, the mobile terminal 10 executes the task content and transmits the automatically input reply message (step S130). Further, even in a case where the automatic input is not permitted in step S127, the mobile terminal 10 executes the task content and transmits the reply message input by the user (step S130). Specifically, first, the task execution unit 27 executes the task content. That is, the task execution unit 27 automatically inputs the approval mark in the approval mark field 343 in the example of Fig. 9, and automatically inputs the "approved tray" in the task information display field 342 in the example of Fig. 10. In this case, the display control unit 22 may highlight the automatic input location to be understood by the user. By highlighting in this way, the user is able to check which part has been changed. Then, in a case where the user instructs to transmit the reply message, the transmission unit 24 transmits the reply message to another user via the wireless circuit 18.

After that, the mobile terminal 10 transmits the explanatory variable and the objective variable input at this time to the inference server 50 (step S131). Specifically, the variable acquisition unit 25 acquires the explanatory variable and the objective variable from the screen displayed in step S129, and the transmission unit 24 transmits the explanatory variable and the objective variable to the inference server 50 via the wireless circuit 18. Here, in the example of Figs. 9 and 10, the explanatory variables may be the sender, the transmission source tray, the reception tray, and the reply message. Further, in the examples of Figs. 9 and 10, the objective variable may be the input of the approval mark to the approval mark field 343 and the input of the "approved tray" to the task information display field 342.

Accordingly, the inference server 50 receives the explanatory variable and the objective variable transmitted in step S131 (step S325).

Then, the inference server 50 relearns the model used for inference, by using the explanatory variable and the objective variable received in step S325 (step S326). By doing so, it can be expected that the accuracy of the next inference will be improved.

With the above operation, the task content can be automatically executed by using the reply candidate selected by the user as a trigger, and the number of operation steps can be significantly reduced. Further, by performing machine learning (classification), prior data and a task definition become unnecessary. Further, in a case where the operation in the sequence diagram of Fig. 16 is performed, since a case where the user intentionally inputs an item in advance is not considered, there is a problem that inappropriate candidates are displayed by automatic input, but such a problem can be avoided by applying the operation in the sequence diagram.

In this operation example, the inference server 50 performs the inference processing, but the mobile terminal 10 may perform the inference processing.

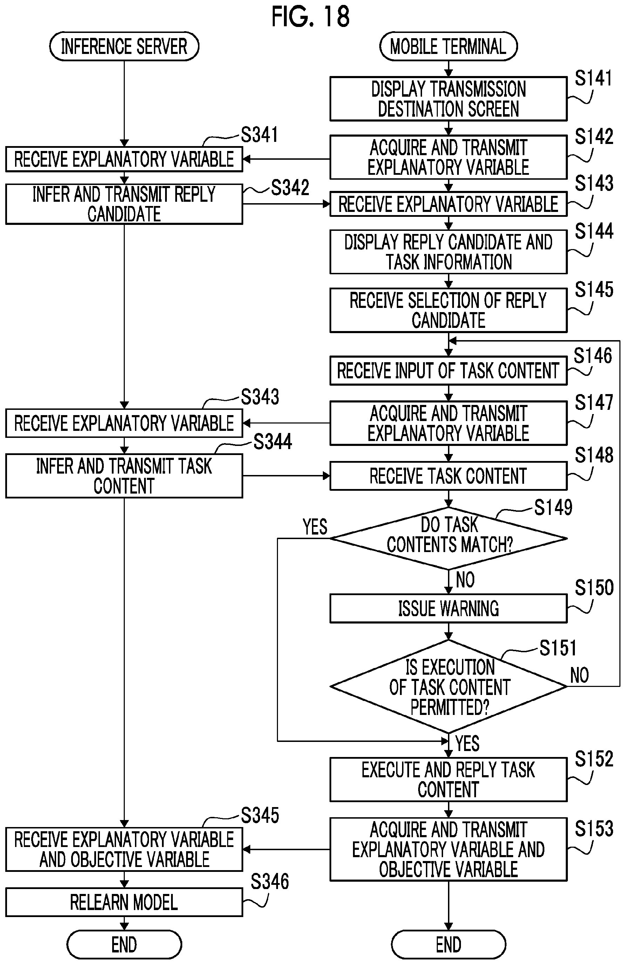

Fig. 18 is a sequence diagram showing a third operation example of the task information proposal system 1. This operation example is also started in a case where the mobile terminal 10 receives a message from another user and tries to reply to the message.

As shown in Fig. 18, first, the mobile terminal 10 displays a transmission destination screen (step S141). Specifically, the display control unit 22 controls the touch panel 14 to display the transmission destination screen by a user operation. Here, the transmission destination screen is a screen for transmitting a reply message in response to a received message from another user with that user as the transmission destination. In the example of Figs. 4 to 10, the transmission destination screen corresponds to a screen before the reply candidate buttons 321a to 321c and the task information display fields 341 to 343 are displayed in Figs. 4, 9, and 10. Further, in the example of Figs. 11 to 14, the transmission destination screen corresponds to a screen before the reply candidate buttons 421a and 421b and the task information display fields 441 to 444 are displayed in Figs. 11 and 13.

Next, the mobile terminal 10 acquires an explanatory variable from the transmission destination screen displayed in step S141, and transmits the explanatory variable to the inference server 50 (step S142). Specifically, the variable acquisition unit 25 acquires the explanatory variable from the transmission destination screen, and the transmission unit 24 transmits the explanatory variable to the inference server 50 via the wireless circuit 18. Here, the explanatory variable may be a received message in both the examples of Figs. 4 to 10 and the examples of Figs. 11 to 14.

As a result, the inference server 50 receives the explanatory variable transmitted in step S142 (step S341).

Then, the inference server 50 infers a reply candidate which is a candidate of the reply message as an objective variable, based on the explanatory variable received in step S341, and transmits the reply candidate to the mobile terminal 10 (step S342).

Then, the mobile terminal 10 receives the reply candidate transmitted in step S342 (step S143). Specifically, the receiving unit 21 receives the reply candidate from the inference server 50 via the wireless circuit 18.

Next, the mobile terminal 10 displays a screen including the reply candidate received in step S 143 and task information related to the task to be executed in a case of transmitting the reply candidate as a reply message (step S144). Specifically, the display control unit 22 controls the touch panel 14 to display a screen including the reply candidate and the task information. Here, the reply candidates correspond to the reply candidates indicated by the reply candidate buttons 321a to 321c in the examples of Figs. 4 to 10, and the reply candidates correspond to the reply candidates indicated by the reply candidate buttons 421a and 421b in the examples of Figs. 11 to 14. Further, the task information is, for example, an area or data on a screen that is a target of the task, a task item indicating the content of the task in a word, or the like. The mobile terminal 10 may specify the task information by the inference of the inference server 50, or may specify the task information by associating the reply candidate with the reply candidate in advance. The display control unit 22 may control the touch panel 14 so as to highlight the task information. Here, the task information corresponds to the approval mark field 343 and the task information display field 342 of the task information display field 341 in the examples of Figs. 4 to 10, and the task information corresponds to the task information display field 441 to 444 and the approval mark field 446 of the task information display field 445 in the examples of Figs. 11 to 14.

Next, the mobile terminal 10 receives the user's selection from the reply candidates displayed in step S144 (step S145). Specifically, in a case where the user selects a reply candidate, the operation receiving unit 23 receives the selection. The user may directly input texts, without selecting the reply candidate.

Next, the mobile terminal 10 receives the input of the task content (step S146). Specifically, in a case where the user inputs a task content and instructs to transmit the reply message, the task execution unit 27 receives the input of the task content. That is, in the examples of Figs. 4 to 10, the task execution unit 27 receives the input of the approval mark to the approval mark field 343, receives the input of "approved tray" to the task information display field 342, or receives the input of "Mr. Suzuki's private post office box" to the task information display field 342.

Next, the mobile terminal 10 acquires an explanatory variable from the screen displayed in step S144, and transmits the explanatory variable to the inference server 50 (step S147). Specifically, the variable acquisition unit 25 acquires the explanatory variable from the screen, and the transmission unit 24 transmits the explanatory variable to the inference server 50 via the wireless circuit 18. Here, in the example of Figs. 4 to 10, the explanatory variables may be the sender, the transmission source tray, the reception tray, and the reply message.

Accordingly, the inference server 50 receives the explanatory variable transmitted in step S147 (step S343).

Then, the inference server 50 infers the task content as the objective variable, based on the explanatory variable received in step S343, and transmits the task content to the mobile terminal 10 (step S344). Specifically, the inference server 50 performs an inference process by using machine learning (classification) such as a random forest or a gradient boosting tree, based on a character string input as an explanatory variable. In this case, the inference process may be performed by applying a filter for each user, and by doing so, it can be expected that irrelevant inference is excluded. Here, in the example of Figs. 4 to 10, the objective variables may be the input of the approval mark to the approval mark field 343 in Fig. 6, the input of "approved tray" to the task information display field 342, or the input of "Mr. Suzuki's private post office box" to the task information display field 342 in Fig. 8. Further, in the example of Figs. 11 to 14, the objective variable may be execution of the task contents in the task information display fields 441 to 444 in Figs. 12 and input of the approval mark in the approval mark field 446, or execution of the task contents of the task information display fields 441 to 444 in Figs. 13.

Then, the mobile terminal 10 receives the task content transmitted in step S344 (step S148). Specifically, the receiving unit 21 receives the task content via the wireless circuit 18.

Then, the mobile terminal 10 determines whether or not the task content received in step S148 matches the task content input in step S146 (step S149). Specifically, the comparison unit 26 determines whether or not these a task contents match.

In a case where it is determined in step S149 that the task contents do not match, the mobile terminal 10 issues a warning (step S150). Specifically, the display control unit 22 controls the touch panel 14 to display a warning dialog.

Then, the mobile terminal 10 determines whether or not the execution of the task content is permitted (step S151). Specifically, the operation receiving unit 23 determines whether or not the OK button is pressed.

In a case where it is determined in step S151 that the execution of the task content is not permitted, the mobile terminal 10 returns the process to step S146.

In a case where it is determined in step S151 that the execution of the task content is permitted, the mobile terminal 10 advances the process to step S152. Further, even in a case where it is determined in step S149 that the task contents match, the mobile terminal 10 advances the process to step S152.

Therefore, the mobile terminal 10 executes the task content and transmits the automatically input reply message (step S152). Specifically, first, the task execution unit 27 executes the input a task content. Then, in a case where the user instructs to transmit the reply message, the transmission unit 24 transmits the reply message to another user via the wireless circuit 18.

After that, the mobile terminal 10 transmits the explanatory variable and the objective variable input at this time to the inference server 50 (step S153). Specifically, the variable acquisition unit 25 acquires the explanatory variable and the objective variable from the screen displayed in step S146, and the transmission unit 24 transmits the explanatory variable and the objective variable to the inference server 50 via the wireless circuit 18. Here, in the example of Figs. 4 to 10, the explanatory variables may be the sender, the transmission source tray, the reception tray, and the reply message. Further, in the example of Figs. 4 to 10, the objective variables may be the input of the approval mark to the approval mark field 343 in Fig. 6, the input of "approved tray" to the task information display field 342, or the input of "Mr. Suzuki's private post office box" to the task information display field 342 Fig. 8.

Accordingly, the inference server 50 receives the explanatory variable and the objective variable transmitted in step S151 (step S345).

Then, the inference server 50 relearns the model used for inference, by using the explanatory variable and the objective variable received in step S345 (step S346). By doing so, it can be expected that the accuracy of the next inference will be improved.

By the above operation, in a case where the user intentionally inputs the task content in advance but the task content is incorrect, the user is able to be made aware of the error.

In this operation example, the inference server 50 performs the inference processing, but the mobile terminal 10 may perform the inference processing.

### [Modification Example]

In the above description, the mobile terminal 10 acquires the received message, controls to display the reply candidate, and controls to display the task information related to the task to be executed in replying the reply candidate as the reply message in association with the reply candidate, but the present invention is not limited to this. For example, an application server (not shown) may acquire the received message, control to display the reply candidate, and control to display the task information related to the task to be executed in replying the reply candidate as the reply message in association with the reply candidate. Specifically, the application server may acquire, for example, the received message from the mobile terminal 10. In addition, for example, the application server may control the reply candidates to be displayed on the mobile terminal 10 by transmitting the reply candidates to the mobile terminal 10. Further, the application server may control the task information to be displayed on the mobile terminal 10 by, for example, transmitting the task information to the mobile terminal 10. The application server may also have the hardware configuration shown in Fig. 3.

In this case, the application server is an example of an information processing system including one or a plurality of processors configured to acquire a received message that is a message received; control to display a candidate message that is a candidate of a message to be replied in response to the received message; and control to display task information related to a task to be executed in relation to replying the candidate message in association with the candidate message.

The "system" in this case may be configured by a plurality of devices or may be configured by a single device.

### [Processor]

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

### [Program]

The process performed by the task information proposal system 1 in the present exemplary embodiment is prepared as, for example, a program such as application software.

In this case, the program that implements the present exemplary embodiment is understood as a program causing a computer to implement a function of acquiring a received message that is a message received, a function of controlling to display a candidate message that is a candidate of a message to be replied in response to the received message, and a function of controlling to display task information related to a task to be executed in relation to replying the candidate message in association with the candidate message.

The program that achieves the present exemplary embodiment can be provided not only via a communication means but also by storing the program in a recording medium such as a CD-ROM.

### Supplementary Notes

(((1))) A program causing a computer to implement:
   a function of acquiring a received message that is a message received;
   a function of controlling to display a candidate message that is a candidate of a message to be replied in response to the received message; and
   a function of controlling to display task information related to a task to be executed in relation to replying the candidate message in association with the candidate message.
(((2))) The program according to (((1))),
   wherein the function of controlling to display the candidate message performs control to display a plurality of candidate messages, and
   the function of controlling to display the task information performs control to display the task information related to a plurality of tasks including the task to be executed in relation to replying any one of the plurality of candidate messages.
(((3))) The program according to (((2))),
   wherein the function of controlling to display the task information performs control to display the task information, in response to an operation on a display element other than the plurality of candidate messages.
(((4))) The program according to (((2))),
   wherein the function of controlling to display the task information performs control such that first task information related to a task to be executed in relation to replying a first candidate message among the plurality of candidate messages, and second task information related to a task to be executed in relation to replying a second candidate message among the plurality of candidate messages are displayed to be distinguished.
(((5))) The program according to (((4))),
   wherein the function of controlling to display the task information performs control such that the first task information and the second task information are displayed to be distinguished according to a display mode in a case where the first task information and the second task information are displayed.
(((6))) The program according to (((4))),
   wherein the function of controlling to display the task information performs control such that the first task information and the second task information are displayed to be distinguished according to a display mode in a case where an operation on the first candidate message is performed.
(((7))) The program according to (((1))),
   wherein the function of controlling to display the candidate message performs control to display a plurality of candidate messages, and
   the function of controlling to display the task information performs control to display task information related to a task to be executed in relation to replying one candidate message among the plurality of candidate messages, in response to an operation on the one candidate message.
(((8))) The program according to (((7))),
   wherein the function of controlling to display the task information performs control to display task information related to a task different from a task to be executed in relation to replying another candidate message among the plurality of candidate messages, as the task information related to the task to be executed in relation to replying the one candidate message.
(((9))) The program according to any one of (((1))) to (((8))),
   wherein the function of controlling to display the task information performs control to display task information related to unexecuted tasks, and not to display task information related to executed tasks, among the tasks to be executed in relation to replying the candidate messages.
(((10))) The program according to any one of (((1))) to (((8))),
   wherein the function of controlling to display the task information performs control such that the task information related to the unexecuted tasks and the task information related to the executed tasks are displayed to be distinguished, among the tasks to be executed in relation to replying the candidate messages.
(((11))) The program according to (((10))),
   wherein the function of controlling to display the task information performs control to further display a ratio of the unexecuted tasks or the executed tasks to the tasks to be executed in relation to replying the candidate messages.
(((12))) The program according to any one of (((1))) to (((11))),
   wherein the candidate messages are associated with a document, and the tasks include an operation on the document.
(((13))) The program according to (((12))),
   wherein the function of controlling to display the task information controls to display information indicating a part to be edited of the document, as the task information.
(((14))) The program according to any one of (((1))) to (((13))),
   wherein the program causes the computer to further implement a function of executing a task corresponding to the task information displayed in association with the candidate message, in response to an operation on the candidate message.
(((15))) An information processing system comprising:
   one or a plurality of processors configured to:
   acquire a received message that is a message received;
   control to display a candidate message that is a candidate of a message to be replied in response to the received message; and
   control to display task information related to a task to be executed in relation to replying the candidate message in association with the candidate message.

According to the invention (((1))), the user is able to recognize the task to be executed in relation to replying the candidate message.

According to the invention (((2))), the user is able to recognize a plurality of tasks including a task to be executed in relation to replying any of the plurality of candidate messages.

According to the invention (((3))), a user is able to recognize a plurality of tasks without operating any of the plurality of candidate messages.

According to the invention of (((4))), the user is able to distinguish and recognize a task to be executed in relation to replying a certain candidate message and a task to be executed in relation to replying another candidate message.

According to the invention of (((5))), the user is able to quickly distinguish and recognize a task to be executed in relation to replying a certain candidate message and a task to be executed in relation to replying another candidate message.

According to the invention of (((6))), the user is able to distinguish and recognize a task to be executed in relation to replying a certain candidate message and a task to be executed in relation to replying another candidate message, when necessary.

According to the invention (((7))), the user is able to recognize the task to be executed in relation to replying a certain candidate message, when necessary.

According to the invention of (((8))), the user is able to recognize that the task to be executed in relation to replying a certain candidate message is different from the task to be executed in relation to replying another candidate message.

According to the invention (((9))), the user is able to recognize only an unexecuted tasks among the tasks to be executed in relation to replying the candidate message.

According to the invention (((10))), the user is able to distinguish and recognize unexecuted tasks and executed tasks among the tasks to be executed in relation to replying the candidate message.

According to the invention (((11))), the user is able to recognize the ratio of the unexecuted tasks or the executed tasks to the tasks to be executed in relation to replying the candidate message.

According to the invention (((12))), the user is able to recognize the task to be executed on the document in relation to replying the candidate message associated with the document.

According to the invention (((13))), the user is able to recognize the part to be edited in the document.

According to the invention of (((14))), the task recognized by the user as the task to be executed in relation to replying the candidate message is automatically executed.

According to the invention (((15))), the user is able to recognize the task to be executed in relation to replying the candidate message.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: task information proposal system
10: mobile terminal
21: receiving unit
22: display control unit
23: operation receiving unit
24: transmission unit
25: variable acquisition unit
26: comparison unit
27: task execution unit
50: inference server

## Claims

1. A program causing a computer to implement:
a function of acquiring a received message that is a message received;
a function of controlling to display a candidate message that is a candidate of a message to be replied in response to the received message; and
a function of controlling to display task information related to a task to be executed in relation to replying the candidate message in association with the candidate message.

2. The program according to claim 1,
wherein the function of controlling to display the candidate message performs control to display a plurality of candidate messages, and
the function of controlling to display the task information performs control to display the task information related to a plurality of tasks including the task to be executed in relation to replying any one of the plurality of candidate messages.

3. The program according to claim 2,
wherein the function of controlling to display the task information performs control to display the task information, in response to an operation on a display element other than the plurality of candidate messages.

4. The program according to claim 2,
wherein the function of controlling to display the task information performs control such that first task information related to a task to be executed in relation to replying a first candidate message among the plurality of candidate messages, and second task information related to a task to be executed in relation to replying a second candidate message among the plurality of candidate messages are displayed to be distinguished.

5. The program according to claim 4,
wherein the function of controlling to display the task information performs control such that the first task information and the second task information are displayed to be distinguished according to a display mode in a case where the first task information and the second task information are displayed.

6. The program according to claim 4,
wherein the function of controlling to display the task information performs control such that the first task information and the second task information are displayed to be distinguished according to a display mode in a case where an operation on the first candidate message is performed.

7. The program according to claim 1,
wherein the function of controlling to display the candidate message performs control to display a plurality of candidate messages, and
the function of controlling to display the task information performs control to display task information related to a task to be executed in relation to replying one candidate message among the plurality of candidate messages, in response to an operation on the one candidate message.

8. The program according to claim 7,
wherein the function of controlling to display the task information performs control to display task information related to a task different from a task to be executed in relation to replying another candidate message among the plurality of candidate messages, as the task information related to the task to be executed in relation to replying the one candidate message.

9. The program according to any one of claims 1 to 8,
wherein the function of controlling to display the task information performs control to display task information related to unexecuted tasks, and not to display task information related to executed tasks, among the tasks to be executed in relation to replying the candidate messages.

10. The program according to any one of claims 1 to 8,
wherein the function of controlling to display the task information performs control such that the task information related to the unexecuted tasks and the task information related to the executed tasks are displayed to be distinguished, among the tasks to be executed in relation to replying the candidate messages.

11. The program according to claim 10,
wherein the function of controlling to display the task information performs control to further display a ratio of the unexecuted tasks or the executed tasks to the tasks to be executed in relation to replying the candidate messages.

12. The program according to any one of claims 1 to 11,
wherein the candidate messages are associated with a document, and
the tasks include an operation on the document.

13. The program according to claim 12,
wherein the function of controlling to display the task information controls to display information indicating a part to be edited of the document, as the task information.

14. The program according to any one of claims 1 to 13,
wherein the program causes the computer to further implement a function of executing a task corresponding to the task information displayed in association with the candidate message, in response to an operation on the candidate message.

15. An information processing system comprising:
one or a plurality of processors configured to:
acquire a received message that is a message received;
control to display a candidate message that is a candidate of a message to be replied in response to the received message; and
control to display task information related to a task to be executed in relation to replying the candidate message in association with the candidate message.
